(19) Europäisches Patentamt
European Patent Office
Office européen des brevets

(11) Veröffentlichungsnummer : **0 158 866 B1**

(12) # EUROPÄISCHE PATENTSCHRIFT

(45) Veröffentlichungstag der Patentschrift : **28.06.89**

(51) Int. Cl.$^4$ : **B 23 K 26/00**

(21) Anmeldenummer : **85103424.9**

(22) Anmeldetag : **22.03.85**

(54) **Werkzeugmaschine zur mechanischen und thermischen Bearbeitung eines Werkstücks.**

(30) Priorität : **24.03.84 DE 3410913**

(43) Veröffentlichungstag der Anmeldung : **23.10.85 Patentblatt 85/43**

(45) Bekanntmachung des Hinweises auf die Patenterteilung : **28.06.89 Patentblatt 89/26**

(84) Benannte Vertragsstaaten : **CH DE FR GB IT LI**

(56) Entgegenhaltungen :
**EP-A- 0 123 183**
**US-A- 3 688 075**
**US-A- 4 063 059**
**US-A- 4 288 679**
**TOOLING & PRODUCTION, Band 42, Nr. 7, Oktober 1976, Seiten 78,79, Hueber Publication Inc., Solon, US; B.A. ROLLAND: "Punching and plasma-arc cutting"**
**V.D.I.-ZEITSCHRIFT, Band 125, Nr. 12, Juni 1983, Seite 494, Düsseldorf, DE; "Laser-Schneid- und Stanzzentrum"**

(73) Patentinhaber : **Trumpf GmbH & Co**
**Postfach 1320 Johann-Maus-Strasse 2**
**D-7257 Ditzingen (DE)**

(72) Erfinder : **Klingel, Hans, Dipl.-Ing.**
**Teckstrasse 19**
**D-7144 Möglingen (DE)**

(74) Vertreter : **Schmid, Berthold et al**
**Patentanwälte Dipl.-Ing. B. Schmid Dr. Ing. G. Birn**
**Falbenhennenstrasse 17**
**D-7000 Stuttgart 1 (DE)**

**EP 0 158 866 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich eine Werkzeugmaschine zur wahlweisen Bearbeitung eines insbesondere tafelförmigen Werkstücks mittels eines mechanischen Bearbeitungswerkzeugs oder einer thermischen Schneideinrichtung, wobei die geometrische Achse des Schneidstrahls in der Arbeitsstellung der thermischen Schneideinrichtung deckungsgleich mit der geometrischen Achse des in Arbeitsstellung befindlichen mechanischen Bearbeitungswerkzeugs ist. Eine derartige Werkzeugmaschine ist durch die US-A-3 688 075 bekannt geworden. Das Besondere dieser Werkzeugmaschine liegt darin, daß sowohl das mechanische Bearbeitungswerkzeug als auch die thermische Schneideinrichtung jeweils eine Arbeitsstellung und eine wirkungslose Ruhestellung einnehmen können. Je nach der gewünschten Bearbeitung des Werkstücks wird dann das eine oder das andere Bearbeitungswerkzeug in die Arbeitsstellung gebracht. Die geometrische Achse des thermischen und des mechanischen Bearbeitungswerkzeugs sind in der Arbeitsstellung jeweils an identischer Stelle, bezogen beispielsweise auf einen festen Arbeitstisch.

Während das mechanische Bearbeitungswerkzeug über eine schwenkbare Halterung in die Arbeitsstellung oder aus dieser herausgebracht werden kann, wird das thermische Bearbeitungswerkzeug quer zu seiner Schneidachse hin und her verschoben. Beide Verstellarten bringen gewisse Toleranzen der Verstellbewegung mit sich. Deshalb ist eine Koaxialität der geometrischen Achsen des Schneidstrahls und des mechanischen Bearbeitungswerkzeugs, jeweils in ihrer Arbeitsstellung, allenfalls im Rahmen dieser Toleranzen zu erzielen. Aus diesem Grunde sind der Bearbeitungsgenauigkeit dieser Maschinen Grenzen gesetzt. Es kommt noch hinzu, daß bei einer Maschine, bei welcher im Gegensatz zu diesem US-Patent nicht gebohrt, sondern gestanzt wird und damit nicht unerhebliche mechanische Erschütterungen auftreten können, sich die Verstellung sowohl des Schneidstrahls als auch des mechanischen Bearbeitungswerkzeugs als besonders nachteilig erweist.

Die Aufgabe der Erfindung besteht infolgedessen darin, eine Werkzeugmaschine der eingangs beschriebenen Art so weiterzubilden, daß die mechanisch u./od. thermisch zu bearbeitenden Werkstücke rasch und genau gefertigt werden können.

Zur Lösung dieser Aufgabe wird erfindungsgemäß vorgeschlagen, daß die Werkzeugmaschine gemäß dem Oberbegriff des Anspruchs 1 dadurch gekennzeichnet ist, daß das mechanische Bearbeitungswerkzeug ein mehrteiliges Stanzwerkzeug und seine geometrische Achse unveränderlich ist, wobei die insbesondere als Laser oder Plasmaschneideinrichtung ausgebildete thermische Schneideinrichtung in eine der Aufnahmen des Stanzwerkzeugs eingesetzt oder einsetzbar oder unter den Stanzkopf bewegbar ist.

Ein Stanzwerkzeug besteht zumindest aus Stanzstempel und Matrize, jedoch wird vielfach auch noch ein drittes Teil, nämlich ein Abstreifer verwendet. Infolgedessen besitzt die Stanzmaschine je eine Aufnahme für den Stanzstempel, den Abstreifer und die Matrize. Wenn man nun die thermische Schneideinrichtung in eine dieser drei Aufnahmen einsetzt, so ist die geometrische Achse der thermischen Schneideinrichtung mit außerordentlich hoher Genauigkeit an die Stelle zu bringen, an der sich die geometrische Achse des Stanzstempels befindet. Der Stanzstempel und die Halterung der thermischen Schneideinrichtung können nämlich ebenso wie die Aufnahmen hierfür mit hoher Genauigkeit gefertigt werden.

Weil das mechanische Bearbeitungswerkzeug, soweit erforderlich, herausgenommen oder in eine wirkungslose Stellung gebracht wird, wozu man bezüglich des Stanzstempels dessen Antrieb heranziehen kann, ist grundsätzlich gewährleistet, daß seine geometrische Achse in der Arbeitsstellung die vorgesehene Stellung fehlerfrei einnimmt. Bei einem Austausch eines der Teile dieses Stanzwerkzeugs durch die thermische Schneideinrichtung betragen die Toleranzen allenfalls einen Bruchteil gegenüber den beiden verfahrbaren Vorrichtungen des Standes der Technik. Hierdurch ist die höhere Genauigkeit gewährleistet. Selbst wenn man die thermische Schneideinrichtung nicht in die Aufnahme für eines der drei Stanzwerkzeugteile einsetzt, sondern von einer wirkungslosen in eine wirksame Stellung bringt, also beispielsweise am Stanzkopf drehbar lagert und im Bedarfsfalle einfach unter den Stanzkopf schwenkt, so ist aufgrund dieser festen Verbindung mit dem Stanzkopf ebenfalls eine hohe Genauigkeit hinsichtlich der Lage der geometrischen Achse der thermischen Schneideinrichtung in Bezug auf die geometrische Achse des Stanzwerkzeug zu erzielen.

Der Vorteil, daß man das Werkstück beim Übergang der Bearbeitung vom mechanischen Bearbeitungswerkzeug auf das thermische seitlich nicht verschieben muß und sich diese Werkzeugmaschine infolgedessen auch besonders leicht automatisieren läßt, bleibt voll erhalten. Dies ist insbesondere bei einer Werkzeugmaschine mit Längs- und Quervorschub von großer Bedeutung, weil jeweils das gleiche Koordinatensystem verwendet werden kann. Im Falle einer programmgesteuerten Maschine kann hinsichtlich der Bewegung des Werkstücks während der Bearbeitung dasselbe Programm verwendet werden.

Wenn die thermische Schneideinrichtung in die Aufnahme eines Stanzmaschinenteils eingesetzt wird, so laufen die Zustell- bzw. Arbeitsrichtungen des Stanzstempels und des Laser- oder Plasmastrahls in gleichem Sinne, also insbesondere von oben nach unten.

Wenn die Arbeits- bzw. Zustellrichtung des mechanischen Bearbeitungswerkzeugs und die Strahlrichtung des Laserstrahls gegeneinander gerichtet sind, so bedeutet dies, daß beispielsweise der Stanzstempel von oben nach unten zugestellt wird, während der Laser- oder Plasmastrahl von unten nach oben in Gegenrichtung arbeitet. Hierbei muß selbstverständlich darauf geachtet werden, daß in keiner Bearbeitungsart das Werkzeug für die andere Bearbeitungsart oder sonstige Einrichtungen und Teile der Werkzeugmaschine beeinträchtigt werden.

Eine weitere Ausgestaltung dieser Werkzeugmaschine besteht darin, daß der Stößel oder die Spindel hohl ist und das der Aufnahme gegenüberliegende Ende des Stößels oder der Spindel eine Eintrittsöffnung für den Laserstrahl bildet. Soweit erforderlich, kann der Laserstrahl vor der Eintrittsöffnung umgelenkt werden. Der Stößel oder die Spindel wird axial vom Laserstrahl durchsetzt. Im Bereich des unteren Endes, d. h. an der Aufnahme des Stößels oder der Spindel wird der Laserstrahl auf die Laserschneideinrichtung treffen, die im wesentlichen aus einer Bündelungseinrichtung bzw. Linse besteht.

Eine weitere Ausbildung der Erfindung ist durch eine Werkzeug-Wechselvorrichtung zur Aufnahme von mechanischen Bearbeitungswerkzeugen und wenigstens eine Laserschneideinrichtung gekennzeichnet. In Abhängigkeit vom Bedarf wird wahlweise ein mechanisches Bearbeitungswerkzeug oder eine Laserschneideinrichtung mit Hilfe dieser Wechselvorrichtung in die Aufnahme des Stößels oder der Spindel eingesetzt, nachdem gegebenenfalls das zuvor darin befindliche Werkzeug entnommen wurde. Falls die Laserschneideinrichtung nicht in die Aufnahme für das mechanische Bearbeitungswerkzeug, sondern eine spezielle Laser-Aufnahme eingesetzt wird, so erfolgt das Einwechseln der Laserschneideinrichtung selbstverständlich in diese Laser-Aufnahme. Entsprechendes gilt für das Rückwechseln zu einem mechanischen Bearbeitungswerkzeug. Insofern ist ein automatischer, programmgesteuerter Werkzeugwechsel trotz dieser verschiedenartigen Werkzeuge — mechanisches Bearbeitungswerkzeug und Laserschneideinrichtung — möglich.

Eine besonders bevorzugte Ausführungsform der Erfindung sieht vor, daß die Werkzeug-Wechselvorrichtung wenigstens einen Revolverteller od. dgl. aufweist. Auf diesem sind die Werkzeuge bzw. Laserschneideinrichtungen entlang einer Kreisbahn angeordnet. Diese Wechselvorrichtung kann in der bei rein mechanischen Bearbeitungswerkzeugen, insbesondere bei Stanzmaschinen, bekannten Art ausgebildet sein, jedoch ist eine gewisse Anpassung insoweit notwendig, als nunmehr außer den mechanischen Bearbeitungswerkzeugen auch noch mindestens eine Laserschneideinrichtung auf dem Revolverteller Platz finden muß.

Weitere vorteilhafte Ausgestaltungen der Erfindung ergeben sich aus den Ansprüchen 5 bis 39 sowie der nachstehenden Zeichnungsbeschreibung, weswegen alle Ausführungen der letzteren als erfindungswesentlich angesehen werden. Außerdem wird es als im Rahmen der Erfindung liegend angesehen, wenn bei verschiedenen Ausführungsbeispielen an Stelle der Laser-Schneideinrichtung eine Plasma-Schneideinrichtung tritt und umgekehrt, sowie diese beiden thermischen Schneideinrichtungen im Rahmen der Offenbarung austauschbar sind.

Die Erfindung wird nachstehend anhand der Zeichnung näher erläutert.

Die Zeichnung zeigt Ausführungsbeispiele der Erfindung. Hierbei stellen dar :

Fig. 1 eine schematisierte Seitenansicht der Werkzeugmaschine,

Fig. 2 in vergrößertem Maßstab den Stößelbereich der Werkzeugmaschine mit eingesetzter Laserschneideinrichtung,

Fig. 3 eine der Fig. 2 entsprechende Darstellung mit einem als Stanzwerkzeug ausgebildeten mechanischen Bearbeitungswerkzeug,

Fig. 4 eine zweite Variante der Erfindung in einer ähnlichen Darstellung wie Fig. 1,

Fig. 5 einen Schnitt gemäß der Linie V-V der Fig. 4,

Fig. 6 die Werkzeugmaschine in Verbindung mit einer vorgelagerten Wechseleinrichtung,

Fig. 7 die Werkzeugmaschine mit einer Revolver-Werkzeugwechselvorrichtung,

Fig. 8 schematisch in der Seitenansicht eine andere Ausführungsform der Maschine,

Fig. 9 schematisch in einem Längsschnitt die Werkzeugmaschine im Bereich des Stößels zusammen mit einer Blockbilddarstellung der Steuerung sowie der Versorgung mit verschiedenen flüssigen und gasförmigen Medien,

Fig. 10 u. 11 wiederum Ausschnitte im Bereich der Werkzeugaufnahme in einem Längsschnitt in der Ruhe- sowie der Arbeitsstellung der Laser-Schneideinrichtung,

Fig. 12, 13 u. 14 schematische Längsmittelschnitte im Bereich der Werkzeugaufnahme verschiedener Ausführungsformen der Erfindung,

Fig. 15 in der Seitenansicht eine schematische Darstellung einer anderen Variante der Erfindung,

Fig. 16 bis 20 verschiedene Ausführungsbeispiele in schematischen Längsschnitten im Bereich der Werkzeugaufnahme,

Fign. 21 bis 23 wiederum verschiedene Längsschnitte im Bereich des unteren Stößelendes, wobei Fig. 22 die Maschine mit einem Stanzstempel in Arbeitsstellung und Fig. 23 die Maschine mit einer Laser-Schneideinrichtung in Arbeitsstellung zeigen,

Fign. 24 und 25 wiederum schematisch in Längsschnitten zwei verschiedene Stellungen der Laser-Schneideinrichtung und des Stanzwerkzeugs,

Fig. 26 in vergrößertem Maßstab einen schematischen Längsmittelschnitt im Bereich der in Arbeitsstellung befindlichen Plasma-Schneideinrichtung,

Fig. 27 eine Darstellung gemäß Fig. 9, jedoch mit einer Plasma-Schneideinrichtung, an Stelle der Laser-Schneideinrichtung.

Die Werkzeugmaschine ist von ihrem grundsätzlichen Aufbau her vergleichbar mit einer herkömmlichen Stanz- oder Nibbelmaschine. Sie besitzt eine Längsführung 1 und eine Querführung 2, mit deren Hilfe das Werkstück 3 innerhalb seiner Ebene auf quasi jeder beliebigen Bahn bewegt werden kann. Diese Bewegungsart ist vergleichbar mit derjenigen eines Kreuzsupports. Die Querbewegung erzeugt ein erster Motor 4, dessen Ritzel 5 mit einer sich in Längsrichtung der Querführung 2 erstreckenden Zahnstange 6 zusammenwirkt. Ein zweiter Motor 7 trägt ebenfalls ein Ritzel, welches mit einer entlang der Längsführung 1 angeordneten Zahnstange kämmt. Die Motoren 4 und 5 werden über eine Steuerung, insbesondere Programmsteuerung, ein- und ausgeschaltet, wobei sie je nach der gewünschten Verschieberichtung des Werkstücks 3 gleichzeitig oder nacheinander ein- und ausgeschaltet werden. Das Werkstück 3 liegt auf einem Tisch 8 auf, der entlang der Führung 1 verschiebbar ist. Auch der Motor 4 und die Querführung 2 machen diese Verschiebebewegung in Richtung der Längsführung mit. Bei eingeschaltetem Motor 4 erfolgt ein Verschieben des Werkstücks 3 senkrecht zur Bildebene und damit auch relativ zum Tisch 8. Das Werkstück 3 wird mit Hilfe von einer oder mehreren, insbesondere pratzenförmigen Spannvorrichtungen 9 gehalten, die ebenfalls programmgesteuert ausgebildet sein können.

Die Werkzeugmaschine besitzt eine Werkzeugaufnahme 10, in welche erfindungsgemäß wahlweise ein mechanisches Bearbeitungswerkzeug oder eine Laserschneideinrichtung eingesetzt werden kann. Im Falle einer Stanz- oder Nibbelmaschine nimmt diese Werkzeugaufnahme 10 einen Stanz- oder Nibbelstempel auf, der in bekannter Weise einen Teil eines wenigstens zweiteiligen Werkzeugs bildet. Beim Ausführungsbeispiel nach Fig. 3 besteht dieses mehrteilige Werkzeug aus dem genannten Stanz- oder Nibbelstempel 11, einem Abstreifer 12 sowie einer Matrize 13, die in eine entsprechende Aufnahme des Tisches 8 eingesetzt ist. Die Werkzeugaufnahme 10 befindet sich demnach in einem Stößel 14, der im Sinne des Doppelpfeils 15 in einem Zylinder 16 verschiebbar gelagert ist. Gemäß Figuren 2 und 3 findet in bevorzugter Weise ein hydraulischer Stößelantrieb Anwendung, jedoch kann der Stößel in bekannter Weise auch mechanisch über einen Exzenter angetrieben werden, beispielsweise bei der Ausführungsform nach Fig. 4.

Bei den hydraulischen Stößelantrieben nach den Figuren 2 und 3 trägt der Stößel einen Kolben 17, und der Zylinder ist als doppelt wirkender Zylinder mit zwei Anschlüssen 18 und 19 für die Ölzu- und -Ableitung ausgestattet.

Erfindungsgemäß kann in die Werkzeugaufnahme 10 anstelle des mechanischen Bearbeitungswerkzeugs bzw. des einen Teils eines mehrteiligen Bearbeitungswerkzeugs auch eine Laserschneideinrichtung 20 eingesetzt werden. Ihre wichtigsten Teile sind eine Linsenfassung 21 mit einer Linse 22 sowie eine gegen das Werkstück gerichtete Düse 23. Im Bereich der Linsenfassung ist diese Laserschneideinrichtung gleich ausgebildet wie der Kopf 24 des Stanz- oder Nibbelstempels 11.

Sowohl der Stanz- oder Nibbelstempel 11 als auch die Laserschneideinrichtung 20 kann mit Hilfe einer Werkzeug-Wechselvorrichtung im Sinne des Pfeils 25 automatisch ein- und ausgewechselt werden. Zu diesem Zwecke besitzt die Werkzeugaufnahme eine seitliche schlitzförmige Öffnung 26. Der Kopf des Stanz- oder Nibbelstempels bzw. der Laserschneideinrichtung wird in der Aufnahme auf wenigstens seinem halben Außenumfang festgehalten. Im Bereich der seitlichen Öffnung 26 sorgt ein bewegbares Klemmstück 27 für die notwendige Sicherung. Es kann in nicht näher gezeigter Weise beispielsweise gegen die Kraft einer Feder zurückgeschoben oder seitlich verschwenkt werden, damit das Ein- und Auswechseln im Sinne des Pfeils 25 bzw. in Gegenrichtung möglich ist. In bekannter Weise kann man das Ein- und Ausriegeln unmittelbar mit dem Wechselvorgang verbinden und die notwendige Bewegung aus der Bewegung des Werkzeugs bzw. Werkzeugteils oder eines Halters für den Werkzeugwechsel ableiten.

Der hydraulisch angetriebene Stößel besitzt eine zentrische Längsbohrung 28, die nicht nur sein Gewicht verringert, sondern auch den Durchtritt des Laserstrahls 29 von oben nach unten im Sinne des Pfeils 30 ermöglicht. Erzeugt wird der Laserstrahl in einem bekannten Lasergenerator 31, der an geeigneter Stelle, beispielsweise an oder nahe der Rückseite der Werkzeugmaschine, montiert ist. Im letzteren Falle lenkt ein Umlenkspiegel 32 den etwa horizontal ankommenden Laserstrahl um 90° nach unten hin ab.

Fig. 4 zeigt eine andere Ausführungsform mit einem zwar ebenfalls der Rückseite der Werkzeugmaschine zugeordneten Lasergenerator 33, jedoch ist letzterer hier der unteren Hälfte des Maschinengestells 34 zugeordnet. Deshalb wird hier der austretende Laserstrahl über den Umlenkspiegel 35 um 90° nach oben hin umgelenkt.

Da bei den Ausführungsbeispielen nach den Figuren 2 und 3 die Arbeitsrichtung sowohl des mechanischen Arbeitswerkzeugs bzw. Werkzeugteils, nämlich des Stanz- oder Nibbelstempels 11, als auch der Laserschneideinrichtung 20 in gleichem Sinne von oben nach unten verläuft, ist die Arbeitsbewegung des mechanischen Bearbeitungswerkzeugs bei der Ausführungsvariante gemäß Fig. 4 von oben nach unten gerichtet, während der Laserstrahl 29 von unten nach oben hin arbeitet. Deshalb ist bei diesem Ausführungsbeispiel kein hohlgebohrter Stößel erforderlich.

Aus der Schnittdarstellung der Fig. 5 ersieht man, daß in einer Ausnehmung 36 des Maschinengestells 34 ein Einsatz 37 im Sinne des Doppelpfeils 38 verschiebbar und dadurch in zwei mögliche Arbeitsstellungen bringbar ist. In der gezeichneten Arbeitsstellung ist die Matrize 13 des Stanz- oder Nibbelwerkzeugs gegenüber dem Stößel und dem darin eingesetzen Stanz- oder Nibbelstempel 11 ausgerichtet. Die anfallenden Späne rutschen über eine Schrägfläche 39 in einen gegebenenfalls vorhandenen Spänekasten 40. Auch diese Darstellung ist schematisch und deshalb nur beispielsweise zu verstehen. Anstelle einer Rollenführung kann selbstverständlich auch eine entsprechende Gleitführung für den Einsatz 37 vorgesehen sein. Außerdem sind die beiden Endstellungen des Einsatzes 37 durch geeignete Einrichtungen gesichert.

Verschiebt man den Einsatz von der gezeichneten rechten Endstellung in seine Linke, so ist die Laserschneideinrichtung 20, welche sich in der Darstellung rechts neben der Matrize 13 befindet, in ihrer Arbeitsstellung, und sie ist damit auch gegenüber dem Umlenkspiegel 35 genau ausgerichtet. Man erreicht somit in beiden Arbeitsstellungen eine achsgleiche Anordnung der geometrischen Achse 41 der Laserschneideinrichtung 20 einerseits und der geometrischen Achse 42 des mechanischen Bearbeitungswerkzeugs andererseits, wobei diese geometrische Achse 42 nicht nur die Längsachse des Stanz- oder Nibbelstempels 11 und der Matrize 13 sondern auch des Stößels 14 bildet. Im Falle eines andersartigen mechanischen Bearbeitungswerkzeugs tritt an die Stelle des Stößels 14 eine Spindel mit entsprechender Werkzeugaufnahme für dieses mechanische Bearbeitungswerkzeug und gegebenenfalls auch eine Laserschneideinrichtung, wobei dann die geometrische Achse dieser Spindel der geometrischen Achse 42 des Stößels 14 entspricht.

Wie bereits angedeutet, soll sowohl das mechanische Werkzeug als auch die Laserschneideinrichtung mittels einer Werkzeug-Wechselvorrichtung automatisch, insbesondere programmgesteuert, auswechselbar sein. Fig. 6 zeigt eine erste Ausführungsform einer derartigen Werkzeug-Wechselvorrichtung 43. Im Falle eines mehrteiligen mechanischen Bearbeitungswerkzeugs, also beispielsweise eines Stanz- der Nibbelwerkzeugs, mit einem Stanz- oder Nibbelstempel 11 und einer Matrize 13 befinden sich die verschiedenen Stempel 11 in einem oberen Vorrichtungsteil 44 und die zugehörigen Matrizen 13 in einem unteren Vorrichtungsteil 45. Gegebenenfalls kann der obere Vorrichtungsteil auch noch Abstreifer 12 aufnehmen. Beide Vorrichtungsteile sind insbesondere synchron im Sinne des Pfeils 46 und/oder in Gegenrichtung drehbar. Damit kann dann jeweils ein Werkzeug gegenüber der Werkzeugaufnahme der Werkzeugmaschine so ausgerichtet werden, daß eine lineare Übergabe im Sinne des Pfeils 47 möglich ist. Diese erfolgt mit Hilfe beispielsweise pneumatischer oder hydraulischer Vorschubzylinder 48 bzw. 49.

Um wahlweise mit dem mechanischen Bearbeitungswerkzeug oder aber der Laserschneideinrichtung arbeiten zu können, nimmt der obere Vorrichtungsteil 44 auch noch wenigstens eine Laserschneideinrichtung 20 auf. Gegenüberliegend befindet sich dann im unteren Vorrichtungsteil 45 eine Laserschneidauflage 50. Diese wird anstelle der Matrize 13 in die untere Werkzeugaufnahme eingesetzt.

Der Vorteil dieser Wechselvorrichtung besteht darin, daß man sie betätigen, also beispielsweise füllen, oder umrüsten, kann, während mit einem Werkzeug in der Maschine gearbeitet wird. Zum Werkzeugwechsel muß dann lediglich eine leere Halterung 51 bzw. 52 gegenüber der Werkzeugaufnahme der Werkzeugmaschine ausgerichtet werden, damit beim Wechseln lediglich noch die gerade Vorschubbewegung im Sinne des Pfeils 47 durchgeführt werden muß. Nach dem Zurückholen des zuletzt benutzten Werkzeugs entgegen dem Pfeil 47 kann die Wechselvorrichtung im Sinne des Pfeils 46 bzw. in Gegenrichtung gedreht werden, um das nachfolgend benötigte Werkzeug gegenüber der Werkzeugaufnahme der Maschine auszurichten und anschließend zu übergeben.

Demgegenüber handelt es sich bei der Werkzeug-Wechselvorrichtung gemäß Fig. 7 um eine Ausführung mit oberem und unterem Revolverteller 53 bzw. 54. Dabei nimmt der obere Revolverteller die Stanz- oder Nibbelstempel 11 und gegebenenfalls die Abstreifer 12 sowie eine oder mehrere Laserschneideinrichtungen 20 auf, während sich im unteren Revolverteller 54 die zugehörigen Matrizen und die Laserschneidauflage oder -auflagen 50 befinden. Auch die beiden Revolverteller sind im Sinne des Pfeils 55 und/oder in Gegenrichtung, insbesondere synchron, drehbar. In der bei Revolvern üblichen Weise wird der Stanz- oder Nibbelstempel während des Arbeitens durch eine entsprechende Führung des Revolvers geführt, weswegen hier ein Weiterdrehen der Revolver nur bei abgeschaltetem Antrieb möglich ist. In beiden Fällen muß selbstverständlich vor dem Herausnehmen das Werkzeug entriegelt werden. Beim Ausführungsbeispiel der Fig. 6 kann man zum Ent- und Verriegeln die Vorschubbewegung in Pfeilrichtung 47 ausnutzen.

Es bleibt noch nachzutragen, daß die Laserschneideinrichtung so in die Werkzeugaufnahme einzusetzen ist, daß ihre Radialbohrung 57a für die Sauerstoffzuleitung mit einer stößelseitigen Bohrung 57 (Fig. 2) fluchtet. Entsprechende Abdichtungen sind in diesem Bereich selbstverständlich vorhanden, jedoch nicht dargestellt. Ebenso sind die für die Laserschneidtechnik bekannten Einzelheiten wie Einrichtung zur Verstellung der Linsenhöhe, Zustellbewegung der Laserschneideinrichtung, Einrichtung zur Absaugung, Zuführung von mehreren Schneidgasen usw. nicht dargestellt.

Die Werkzeug-Wechselvorrichtung der Fig. 7 ist als Ganzes mit 56 bezeichnet.

Figur 8 zeigt eine andere Ausführungsform der erfindungsgemäßen Maschine. Ausgehend vom Lasergenerator oder Laserresonator 31 wird der Laserstrahl 29 horizontal durch das Maschinengestell 34 zu der Werkzeugaufnahme 10 geführt. Das Laserführungsrohr 60 wird durch Trägerelemente 61 unterstützt. Bei dieser Ausführung kann der Stanzkopf so starr wie üblich ausgeführt sein.

Um mit der Laserschneideinrichtung arbeiten zu können, sind eine Anzahl von Verbindungen und Kontrollelementen notwendig. Diese werden im folgenden beschrieben.

In Figur 9 sind die Komponenten für das Arbeiten mit der Laserschneideinrichtung — generell mit 20a bezeichnet und der mit ihr zusammenarbeitenden Abfallentsorgungseinrichtung 73 —

dargestellt. Die Werkzeugaufnahme 10a ist am unteren Ende des Stanzkopfes 71 angeordnet und bestimmt die Lage der Laserschneideinrichtung 20a. Diese enthält die Düse 23, welche gegenüber dem Werkstück 3 angeordnet ist. Um den Schneidprozeß zu verbessern wird der Laserschneideinrichtung 20a ein Schneidgas — je nach den Anforderungen Sauerstoff, Luft oder Stickstoff — über die Schneidgasleitung 62 zugeführt. Bei dieser Ausführung ist über dem Düsenabschnitt 23 die Linsenfassung 21 mit der Linse 22 dargestellt. Der Außenring der Linsenfassung 21 hat ein Gewinde, das mit dem Gewinde des Fokussierringes 70 zusammenarbeitet. Wenn die Linsenfassung 21 durch eine nicht dargestellte Längsführung am Verdrehen gehindert wird, so kann durch Verdrehen des Fokussierringes 70 die Linse mit der Düse in der Höhe verstellt werden. Die Höheneinstellung der Linse und damit die Lage des Fokuspunktes können auch durch andere geeignete Mittel erfolgen. Schematisch ist die Fokuspunkteinstellung durch das Kästchen 69 dargestellt. Die Schneidgasversorgung 64 hat eine Schneidgaszuleitung 63, die mit der Schneidgasleitung 62 innerhalb der Laserschneideinrichtung 20a verbunden ist. Der Lasergenerator auch Laserresonator genannt, ist schematisch durch das Kästchen 31 dargestellt.

Er ist durch die Laserstrahlführungseinrichtung 65 mit dem Umlenkspiegel 32 verbunden. Da üblicherweise ein Umlenkspiegel 2 gekühlt wird ist der Umlenkspiegel 32 durch die Kühlleitung 66 mit dem Kühlsystem 67 verbunden. In dieser schematischen Darstellung symbolisiert das Kästchen 68 die Zustelleinrichtung für die Werkzeugaufnahme 10a. Um einen freien Durchgang für das Werkstück 3 unterhalb der Düse 23 zu ermöglichen, ist eine vertikale Bewegung der Laserschneideinrichtung 20a angebracht. Dies kann je nach Bauart der verwendeten Stanzmaschine dadurch erreicht werden, daß die Laserschneideinrichtung in die Werkzeugaufnahme 10a des Stößels 8 eingebaut wird, da ja der Stößel über eine vertikale Bewegungsmöglichkeit verfügt. Eine andere Möglichkeit ist, die Laserschneideinrichtung 20a in die Aufnahme für den Abstreifer 12 einzubauen, wenn die Abstreiferaufnahme auch vertikal bewegbar ist. Üblicherweise wird der Stößel für den Werkzeugwechsel in eine obere Position verfahren. Diese obere Position ist ausreichend, um bei eingebauter Laserschneideinrichtung noch Platz für das Werkstück 3 zu haben.

Das Werkstück 3 wird durch eine Werkstückführungseinrichtung — schematisch dargestellt durch das Kästchen 72 — bewegt. Die Abfallentsorgungseinrichtung 73 ist durch eine Leitung 74 mit einem Abfallbehälter 75 verbunden, für die schwereren Abfallteilchen, während die entstehenden Verbrennungsgase durch eine Absaugung 76 abgesaugt werden.

Die für den Laserschneidbetrieb erforderlichen, schematisch dargestellten Komponenten 31, 64, 67, 68, 69, 72, 76 sind durch Leitungen sowohl mit der Steuerung 77 — insbesondere mit einer numerischen Steuerung — und mit der Energieversorgung 78 verbunden. Darüberhinaus ist die Schneidgasversorgung 64 mit dem Schneidgasvorrat 79 verbunden.

In dieser schematischen Übersicht sind die Verbindungen und Kontrollen, die für einen optimalen Schneidbetrieb erforderlich sind, dargestellt. Verschiedene Ausführungsformen, sowohl was die Antriebe wie die Herstellung der Leitungsverbindungen betrifft, sind denkbar. Einige davon sollen im folgenden näher beschrieben werden.

In den Figuren 10 und 11 ist eine weitere Ausführungsform der Erfindung dargestellt. Dabei ist die Laserschneideinrichtung oder allgemein die thermische Schneideinrichtung zwischen einer Ruhelage und einer Arbeitslage zustellbar. In Figur 10 ist der hydraulisch beaufschlagbare Stößel 14a innerhalb des Zylinders 16 auf- und abbewegbar, je nachdem ob Drucköl durch den Anschluß 18 oder 19 zugeführt wird. Der Stößel 14a hat eine zentrale Bohrung, in welchem die Laserschneideinrichtung 20b und ihr Gehäuse 80 gelagert ist. Das Gehäuse 80 ist überdies in dem Stanzkopf 71 befestigt. Ein Stempel 11 ist am unteren Ende des Stößels eingebaut, ebenso ein Abstreifer 12 oberhalb des Werkstücks 3. Im unteren Teil des Maschinengestells 34 ist die Matrize 13, die mit dem Stempel zusammenarbeitet.

In Figur 11 ist der Stempel 11 ausgebaut und die Laserschneideinrichtung 20b ist von der Ruhelage in die Arbeitslage bewegt worden. Die Laserschneideinrichtung 20b ist mit ihrem oberen Ring 81 als Kolben ausgebildet. Um die Laserschneideinrichtung 20b auf- und abbewegen zu können, ist der Zylinderraum 82 mit den Anschlußleitungen 83 und 84 verbindbar. Das Schneidgas wird über die Radialbohrung 56 der Laserschneideinrichtung 20b unterhalb der Linse 22 zugeführt. Es tritt zentrisch zum Laserstrahl 29 aus der Düse 23 aus. Unterhalb des Werkstückes 3 ist die Abfallentsorgungseinrichtung 73, durch die geschnittenes Material, Abfälle und Verbrennungsgase beim Laserschneiden abgeführt werden.

In den Figuren 12 bis 14 werden drei verschiedene Einbauten der Laserschneideinrichtung in den Stanzkopf 71 gezeigt.

In Figur 12 ist die Laserschneideinrichtung 20c in den durchbohrten Stößel 14 eingesetzt. Der Laserstrahl 29 kommt senkrecht von oben. Diese Ausführung ist im Prinzip ähnlich wie die Ausführung nach Figur 2. Lediglich die Zuführung des Schneidgases ist geändert. Bei Figur 12 wird das Schneidgas in die Laserschneideinrichtung 20c nicht radial sondern stirnseitig zugeführt.

In Figur 13 ist die Laserschneideinrichtung 20d in die Aufnahme für den Abstreifer 12a montiert. Der Abstreifer 12a ist mit einem Gewinde 85 versehen, das mit dem Gewinde 86 am Stanzkopf 71 zusammenarbeitet. Außerdem hat er eine Außenverzahnung 87, in die ein Ritzel 88 eingreift, das auf einer Motorwelle 89 sitzt. Durch Drehen des Motors 90 kann die Höhenverstellung der Laserschneideinrichtung 20d erfolgen. Dabei können zwei verschiedene Ausführungsformen gebaut werden. Bei der einen Ausführungsform dreht sich die Laserschneideinrichtung 20d mit. In diesem Fall muß dafür gesorgt werden, daß eine ringsum laufende Schneidgaszuführung möglich ist. Im anderen Fall ist durch eine nicht dargestellte Längsführung die Laserschneideinrichtung 20d am Verdrehen gehindert.

Figur 14 zeigt eine Laserschneideinrichtung 20e, die in eine entsprechende Aufnahme am Stanzkopf 71 eingesetzt ist. Die Schneidgaszufuhr erfolgt über die horizontal laufende Radialbohrung 56.

Normalerweise wird der Laserstrahl 29 nach dem Austritt aus dem Lasergenerator 33 horizontal verlaufen. Da er aber senkrecht auf das üblicherweise horizontal liegende Werkstück 3 auftreffen muß, ist eine Umlenkung durch einen Umlenkspiegel 32 erforderlich.

Je nach Bauform des Lasergenerators 33 ist aber auch eine Anordnung nach Figur 15 möglich. Hierbei verläuft der Laserstrahl 29 schon in der gewünschten Richtung, so daß auf einen Umlenkspiegel 32 verzichtet werden kann. Bei den Ausführungsformen nach den Figuren 16-23 wird davon ausgegangen, daß der Laserstrahl 29 nach Verlassen des Lasergenerators 33 horizontal verläuft und durch eine entsprechende Einrichtung umgelenkt werden muß.

Figur 16 zeigt im Prinzip die gleiche Anordnung wie Figur 14. In beiden Fällen wird die Laserschneideinrichtung 20e bzw. 20f in eine Aufnahme am Stanzkopf 71 eingesetzt. Die Laserschneideinrichtung 20f enthält aber neben der Linse 22 und der Düse 23 auch noch den Umlenkspiegel 32a. Der Laserstrahl 29 wird durch eine entsprechende Öffnung im Trägerelement 61 zu dem Stanzkopf 71 geführt. Die Schneidgaszuführung erfolgt über die Radialbohrung 56, die Kühlmittelzufuhr über die Kühlleitung 91.

In Figur 17 ist die Laserschneideinrichtung 20g in den unteren Teil des Stößels 14 eingesetzt. Die Laserschneideinrichtung 20g enthält einen parabolischen Spiegel, der sowohl die Umlenkung von der horizontalen in die vertikale Richtung bewirkt wie die Fokussierung in einen Brennpunkt auf der Oberfläche des Werkstücks 3. Bei dieser Ausführung wird sowohl der Laserstrahl 29 wie die Schneidgaszufuhr über das durchbohrte Trägerelement 61a geführt. Die Kühlung des parabolischen Spiegels 92 erfolgt über das Schneidgas.

Bei der Ausführung nach Figur 18 ist die Laserschneideinrichtung 20h im unteren Teil des Stanzkopfes 71 eingesetzt. Bei dieser Ausführung enthält der Einsatz für die Laserschneideinrichtung 20h aber nicht die Fokussierlinse 93.

Diese ist im festen Gehäuse des Stanzkopfes untergebracht. Selbstverständlich kann die Fokusierlinse 93 auch durch eine Verstelleinrichtung in ihrer Lage verändert werden, sodaß die Lage des Brennpunktes bezüglich der Oberfläche des Werkstücks 3 verändert werden kann. Der Laserstrahl 29 wird über das durchgebohrte Trägerelement 61, das Schneidgas über die Schneidgasleitung 62 dem Einsatz für die Laserschneideinrichtung 20h zugeführt.

In Figur 19 ist eine andere Art dargestellt, wie die Laserschneideinrichtung in die Arbeitsstellung gebracht werden kann. Neben dem Stanzkopf 71 ist ein röhrenförmiges Gehäuse 93. In diesem röhrenförmigen Gehäuse 93 ist die Laserschneideinrichtung 20i drehbar und verschiebbar angeordnet. Das Gehäuse 94 der Laserschneideinrichtung 20i hat einen Abschnitt, der mit einer Außenverzahnung 95 versehen ist. In diese Außenverzahnung 95 greift ein Ritzel 96, das auf der Welle eines Motors 97 befestigt ist. Durch Drehen des Motors 97 kann die Laserschneideinrichtung 20i um die Achse des röhrenförmigen Gehäuses 94 geschwenkt werden. Dies ist dann möglich, wenn die Laserschneideinrichtung 20i durch den Motor 100 und ein Getriebe, das aus einem Zahnrad 99 und einer Zahnstange 98 besteht, von der strichpunktierten Lage nach unten abgesenkt worden ist. Wenn der Motor 100 mit einer feinfühligen Steuerung verbunden ist, so läßt sich auch über diesen Motor 100 die Fokuseinstellung bewirken. In der gezeichneten Arbeitsstellung der Laserschneideinrichtung 20i trifft der Laserstrahl auf den ersten Umlenkspiegel 101, der den Laserstrahl über den zweiten Umlenkspiegel 102 der Linse 103 zuführt. Der teilfokussierte Laserstrahl wird über den weiteren Umlenkspiegel 104 senkrecht auf die Oberfläche des Werkstücks 3 gebracht. Über die Kühlmittelleitung 105 kann das Kühlmittel zu den entsprechenden Umlenkspiegeln, insbesondere zum Umlenkspiegel 194, gebracht werden.

Auf der schematischen Übersicht in Figur 9 ist gezeigt worden, daß für den Laserschneidbetrieb eine Anzahl von Verbindungen notwendig sind. Besonders bei einem automatisierten Wechsel zwischen Stanzbetrieb und Laserschneidbetrieb ist es erforderlich, daß die Verbindungen schnell und sicher hergestellt werden. Hierfür zeigt die Figur 20 ein Ausführungsbeispiel. Dabei sind die notwendigen Verbindungen alle in einem in Richtung des Doppelpfeiles verschiebbaren Verbindungsstückes 107 untergebracht. Im einzelnen sind dies der Laserstrahl 29, die Kühlmittelleitung 105 zur Verbindung des zu kühlenden Umlenkspiegels 106 und die Bohrung 56 für die Schneidgaszuführung. Nachdem die Laserschneideinrichtung 20j durch eine gesteuerte Bewegung in die Arbeitslage gebracht ist, wird die Bewegung des Verbindungsstückes 107 in der Bohrung 108 durch die Steuerung 77 ausgelöst und kontrolliert. Dadurch ist eine sichere und automatisierte Herstellung aller Verbindungen möglich.

Um zu vermeiden, daß der Stößel 14 mit einer durchgehenden Bohrung versehen werden muß, was besonders bei mechanischen Pressen von Nachteil sein kann, sind drei weitere Ausführungsformen nach Figur 21-23 gezeigt. Figur 21 zeigt einen im unteren Bereich des Stößels 14 angebrachten oder eingesetzten Umlenkspiegel 109. Der Stößel 14 wird über nichtgezeigte Mittel in eine genaue Position gebracht. Nun gelangt der Laserstrahl 29 durch die Öffnung 111 im Stanzkopf 71 und die Öffnung 110 im Stößel 14 zum Umlenkspiegel 109 und wird nach Umlenken durch die vertikale Bohrung im Stößel zu der nicht gezeichneten Laserschneideinrichtung gebracht. Bei den Ausführungsformen nach Figur 22 und Figur 23 ist der Umlenkspiegel 115 nicht an einem bewegbaren Teil sondern an einer fest mit dem Stanzkopf 71 verbundenen Spiegelhalterung 114 angebracht. Der Stößel 14 weist ein Langloch 113 auf, das so lang ist, daß der Stößel 14 seinen Stanzhub ausführen kann, ohne daß das Langloch 113 mit der Spiegelhalterung 114 in Berührung kommt. Der untere Teil des Stößels 14 weist eine Bohrung zwischen dem Stößelende und dem Langloch auf. Diese Bohrung kann zur Aufnahme des Stempels 11 beim Stanzbetrieb benutzt werden.

Nach Einsetzen der Laserschneideinrichtung 20k in den Stößel 14, in die Aufnahme für den Abstreifer 12 oder direkt in den Stanzkopf 71 wird der Laserstrahl 29 über die Öffnung 111 im Stanzkopf 71 und die Öffnung 112 im Stößel 14 zum Umlenkspiegel 115 gebracht und von dort der Laserschneideinrichtung 20k zugeführt.

Wie schon in Figur 4 schematisch dargestellt, zeigen die Figuren 24 und 25 Ausführungsbeispiele der Erfindung, bei denen die Laserschneideinrichtung in dem unteren Teil der Maschine angeordnet ist. Bei dieser Ausführung verfügt der Stanzkopf 71 über eine Abfallentsorgungseinrichtung 120, wobei Öffnungen 121 mit einer Absaugleitung 122 verbunden sind. Die Laserschneideinrichtung 20l ist an ihrem unteren Ende mit einem Ring versehen, der eine Außenverzahnung 125 trägt. In dieser Außenverzahnung 125 greift ein Ritzel 126 ein, das von einem Motor 127 angetrieben wird. Der obere Hals der Laserschneideinrichtung 20l trägt ein Gewinde 123, das mit einem Innengewinde im Rohrträger 124 zusammenarbeitet. Dieser Rohrträger 124 kann über einen Antrieb 129 in der Höhe verstellt werden, so daß die Laserschneideinrichtung 20l von ihrer Ruhelage in Figur 25 in ihre Arbeitslage in Figur 24 gebracht werden kann. Die Feineinstellung der Fokuslage gegenüber der Unterfläche des Werkstücks 3 erfolgt über den Motor 127. Selbstverständlich sind hier auch andere Verstellmöglichkeiten ausführbar. Der Rohrträger 124 wird durch ein Rohr 131 geführt. Der Laserstrahl 29 wird über den Umlenkspiegel 130 in die vertikale Richtung umgelenkt. Während die Figur 24 den Laserschneidbetrieb darstellt, zeigt die Figur 25 den Stanzbetrieb. Hierbei ist eine Stanzstempel 11 in den Stößel 14 eingesetzt und eine Matrize 13 in den unteren Teil des Maschinengestells. Um die Laserschneideinrichtung 20l vor den abfallenden Spänen beim Stanzen zu schützen, ist ein verschiebbares oder einschwenkbares Schutzschild 132 vorgesehen. Dieses Schutzschild übernimmt die Aufgabe der Schrägfläche 39 von Figur 5. Auf diesem Schutzschild rutschen die Späne und der übrige Abfall beim Stanzen in nicht dargestellte Spänebehälter.

Die Figuren 26 und 27 zeigen eine Ausführungform der Erfindung, bei der die Laserschneideinheit 20 durch eine Plasmaschneideinheit 140 ersetzt ist. Wie aus dem Vergleich der schematischen Darstellungen von Figur 9 und 27 hervorgeht, sind sehr große Ähnlichkeiten zwischen den beiden Verfahren, sowohl was die Aufgabenstellung, die bauliche Größe der Schneideinheit, die notwendigen Komponenten und ihre Verbindungen betrifft. Während bei der Laserschneideinheit ein Laserstrahl gebündelt wird, wozu eine Fokussiereinrichtung und eine Düse erforderlich ist, wird bei der Plasmaschneideinrichtung ein Plasmastrahl ebenso gebündelt, wozu ebenfalls eine Fokussiereinrichtung und eine Düse erforderlich sind. Die Bündelung erfolgt beim Laserschneiden durch eine Linse oder einen parabolischen Spiegel, beim Plasmaschneiden durch die Düse und durch Wasser, das radial gegen den Plasmastrahl gespritzt wird. Beim Plasmaschneiden übernimmt die Plasmagasversorgung 157 auch Aufgaben, die beim Laserschneiden die Schneidgasversorgung 64 erfüllt.

Den grundsätzlichen Aufbau einer Plasmaschneideinrichtung zeigt Figur 26. Bei der hier gezeigten Ausführungform ist die Plasmaschneideinrichtung 140 in den Stößel 14 einer Stanzmaschine eingesetzt. Die Plasmaschneideinrichtung 140 besteht aus dem Plasmabrenner 141 und der Schneidglocke 145, die zugleich Halterung für den Plasmabrenner 141 ist. Die Schneidglocke 145 hat Saugschlitze 146 die über Verbindungsleitungen 147 mit der Saugleitung 160 der Absaugeinrichtung 159 verbunden sind. Innerhalb einer axialen Bohrung im Plasmabrenner 141 ist die Elektrode 142 angebracht. Die Elektrode 142 hat an ihrem oberen Ende eine Elektrodenkupplung 164, die mit der isoliert gelagerten Stromführung 156 verbindbar ist. Die Stromführung 156 ist im Inneren des Stößels 14 angeordnet. Die Elektrode 142 ragt in eine Bohrung, die über eine Verbindungsleitung 143 und die Plasmagaszuleitung 158 mit der Plasmagasversorgung 157 verbunden ist. Im Plasmabrenner 141 befindet sich ein konischer Hohlraum, der über die Verbindungsleitung 144 und die Wasserzuleitung 154 mit der Wasserversorgung 153 verbunden ist.

Wird Spannung über die Stromführung 156 an die Elektrode 152 gelegt und Plasmagas über die Plasmagaszuleitung 158 und die Verbindungsleitung 143 dem Plasmabrenner 141 zugeführt, so wird das Plasmagas ionisiert, wodurch nach der Einschnürung durch das von der Wasserversorgung 153 zugeführte Wasser am düsenartigen Ende des Plasmabrenners 141 die für das Schneiden des Metalles notwendige Temperatur entsteht. Das von der Wasserversorgung 153 zugeführte Wasser übernimmt die Kühlung der wesentlichen Teile des Plasmabrenners 141. Dieses Wasser wird über die Saugschlitze 146 von der Absaugeinrichtung 159 von der Oberfläche des Werkstücks 3 abgesaugt.

Die Ausführungsbeispiele zeigen, daß die thermische Schneideinheit — Laserschneideinheit oder Plasmaschneideinheit — im oberen oder im unteren Teil der Stanzmaschine eingesetzt werden können. Als Aufnahme für die thermische Schneideinheit kann die Werkzeughalterung im Stößel, die Aufnahme für den Abstreifer oder eine andere geeignete Aufnahme z. B. am Stanzkopf dienen. Der Laserstrahl kann in jeder beliebigen Richtung der Laserschneideinheit zugeführt werden. Durch entsprechende Umlenkmittel muß dann dafür gesorgt werden, daß die Achse der Schneideinrichtung mit der Achse für die mechanische Verarbeitung zusammenfällt. Die Ausführungsbeispiele haben gezeigt, daß es nicht unbedingt notwendig ist, den Stößel zu durchbohren. Die Zustellung für die thermische Schneideinheit kann durch eine schon vorhandene Bewegungsmöglichkeit des Stößels oder des Abstreifers oder aber durch eine zusätzliche Verstelleinrichtung erfolgen. Dies gilt auch für eine etwaige Einrichtung zum Verstellen der Lage des Fokuspunktes. Das Einsetzen der thermischen Schneideinrichtung in die entsprechende Aufnahme kann von Hand, oder automatisch erfolgen. Das automatische Einwechseln der thermischen Schneideinheit ist mit einem für die Stanzstempel üblichen Werkzeugwechsler, einem verdrehbaren Revolver, einem Roboter oder einer speziellen Wechseleinrichtung möglich.

Das Herstellen der Verbindungen zwischen der thermischen Schneideinheit und den für den Schneidprozeß erforderlichen Komponenten kann ebenfalls von Hand oder automatisch erfolgen. Die Schneideinrichtung kann so gestaltet sein, daß durch die Einsatzbewegung auch alle Anschlüsse geschaffen werden. Wenn dies nicht der Fall ist, so kann durch eine zusätzliche Bewegung eines Verbindungsstückes der erforderliche Anschluß erreicht werden.

## Patentansprüche

1. Werkzeugmaschine zur wahlweisen Bearbeitung eines insbesondere tafelförmigen Werkstücks mittels eines mechanischen Bearbeitungswerkzeugs oder einer thermischen Schneideinrichtung, wobei die geometrische Achse (42) des Schneidstrahls (29) in der Arbeitsstellung der thermischen Schneideinrichtung (20, 140) deckungsgleich mit der geometrischen Achse (41) des in Arbeitsstellung befindlichen mechanischen Bearbeitungswerkzeugs (11, 12, 13) ist, dadurch gekennzeichnet, daß das mechanische Bearbeitungswerkzeug ein mehrteiliges Stanzwerkzeug und seine geometrische Achse (41) unveränderlich ist, wobei die insbesondere als Laser- oder Plasmaschneideinrichtung ausgebildete thermische Schneideinrichtung (20, 140) in eine der Aufnahmen des Stanzwerkzeugs (11, 12, 13) eingesetzt oder einsetzbar oder unter den Stanzkopf (71) bewegbar ist.

2. Werkzeugmaschine nach Anspruch 1, dadurch gekennzeichnet, daß jeweils in Arbeitsstellung die Arbeits- bzw. Zustellrichtung (30) des mechanischen Bearbeitungswerkzeugs (11, 12, 13) und die Strahlrichtung des thermischen Schneidstrahls (29) gegeneinander gerichtet sind.

3. Werkzeugmaschine nach Anspruch 2, dadurch gekennzeichnet, daß der Stößel (14) hohl ist und das der Aufnahme (10) gegenüberliegende Ende des Stößels (14) eine Eintrittsöffnung für den Laserstrahl (29) oder den Gasstrom für den Plasmastrahl bildet.

4. Werkzeugmaschine nach Anspruch 2 oder 3, dadurch gekennzeichnet, daß sich die thermische Schneideinrichtung (20, 140) in ihrer Ruhestellung über dem inneren Ende des mechanischen Bearbeitungswerkzeugs (11, 12, 13) bzw. dem Stempel eines Stanzwerkzeugs befindet und es eine in Arbeitsrichtung des letzteren ausfahrbare Düse aufweist.

5. Werkzeugmaschine nach Anspruch 4, dadurch gekennzeichnet, daß sich am inneren Ende der ausfahrbaren Düse (23) ein Kolben (81) befindet, der in einem doppelt wirkenden Arbeitszylinder (82) verschiebbar ist, wobei ein Innenrohr des Arbeitszylinders in die rohrförmige Düse (23) dichtend eingreift und das Innenrohr einen Kanalabschnitt für den Schneidstrahl bildet.

6. Werkzeugmaschine nach Anspruch 5, dadurch gekennzeichnet, daß der Arbeitszylinder (82) der Laser-Schneideinrichtung (20) im Kopf der Maschine, insbesondere einem Stanzkopf (71), gehalten ist und er zentrisch in den Stößel (14) hineinragt, wobei letzterer zumindest in diesem Bereich rohrförmig ausgebildet ist.

7. Werkzeugmaschine nach Anspruch 6, dadurch gekennzeichnet, daß sich am Kopf der Maschine, insbesondere am Stanzkopf (71), Anschlußbohrungen (18, 19) für den hydraulischen oder pneumatischen Stößel (14) bzw. (83, 84) für den Kolben (81) der Laser-Schneideinrichtung (20) befinden, die in der Arbeitsstellung der Laser-Schneideinrichtung zumindest teilweise mit weiterführenden Kanälen im Stößel (14) in Strömungsverbindung stehen.

8. Werkzeugmaschine nach Anspruch 7, dadurch gekennzeichnet, daß sich am Kopf der Maschine, insbesondere am Stanzkopf (71), eine Anschlußbohrung (56) für eine Schneidgasleitung der Laser-Schneideinrichtung befindet, die in der Arbeitsstellung der letzteren mit einem weiterführenden Kanal des Stößels (14) in Strömungsverbindung steht.

9. Werkzeugmaschine nach wenigstens einem der vorhergehenden Ansprüche, gekennzeichnet durch eine Einstellvorrichtung für den Abstand der Düse der thermischen Schneideinrichtung bzw. der Düse (23) der Laser-Schneideinrichtung (20) oder der Düse der Plasma-Schneideinrichtung (140) von der Werkstückebene.

10. Werkzeugmaschine nach Anspruch 9, dadurch gekennzeichnet, daß der Stößel (14) der Maschine zugleich eine Abstands-Einstellvorrichtung bildet oder trägt.

11. Werkzeugmaschine nach Anspruch 9, dadurch gekennzeichnet, daß die Laser-Schneideinrichtung (20) an einem Abstreifer (12) eines Stanzwerkzeugs oder einer Halterung hierfür befestigt ist, wobei der Abstreifer oder dessen Halterung mit einem Verstellantrieb (87, 88, 90) der Abstands-Einstellvorrichtung verbunden ist.

12. Werkzeugmaschine nach Anspruch 11, dadurch gekennzeichnet, daß der Abstreifer (12) bzw. dessen Halterung mittels einer Gewindeverbindung (85, 86) am Stanzkopf (71) od. dgl. gehalten ist und er bzw. sie mittels eines Motors (90) und eines Getriebes (87, 88) einstellbar ist.

13. Werkzeugmaschine nach Anspruch 9, dadurch gekennzeichnet, daß die Laser-Schneideinrichtung (20) an einem parallel zur Schneidrichtung zustellbaren, am Stanzkopf (71) od. dgl. gelagerten Halter (94) befestigt ist, der mit einem Verschiebeantrieb (98, 99, 100) verbunden ist.

14. Werkzeugmaschine nach Anspruch 13, dadurch gekennzeichnet, daß der Verschiebeantrieb des Halters (94) der Laser-Schneideinrichtung (20) aus einer Zahnstange (98) des Halters und einem mittels eines Motors (100) antreibbaren Ritzel (99) besteht.

15. Werkzeugmaschine nach Anspruch 13 oder 14, dadurch gekennzeichnet, daß der Halter (94) der Laser-Schneideinrichtung aus einem in einer rohrförmigen, am Stanzkopf (71) od. dgl. befestigten oder angeformten Gehäuse (93) verschieb- und drehbaren Schaft mit einem seitlichen, zumindest die Laser-Düse (23) tragenden Ausleger besteht, wobei der Schaft mit einem Schwenkantrieb (95, 96, 97) verbunden ist zur Überführung der Düse (23) von der Arbeits- in eine Ruhestellung und umgekehrt.

16. Werkzeugmaschine nach Anspruch 15, dadurch gekennzeichnet, daß der Schwenkantrieb des Halters (94) aus einem Zahnkranz (95) des Schafts und einem mittels eines Motors (97) antreibbaren Ritzel (96) besteht, wobei die Breite des Zahnkranzes (95) diejenige des Ritzels (96) etwa um die Hubhöhe des Halters (94) übertrifft.

17. Werkzeugmaschine nach Anspruch 15 oder 16, dadurch gekennzeichnet, daß sich im Innern des Halters (94) ein Kanalstück für den Laserstrahl (29) und drei Umlenkspiegel (101, 102, 104) sowie eine Linse (103) od. dgl. befinden und das Kanalstück in der Arbeitsstellung der Düse (23) mit einem Zuführungskanal (118) in Verbindung steht.

18. Werkzeugmaschine nach Anspruch 2 und 9, dadurch gekennzeichnet, daß die Laser-Schneideinrichtung (20) an einem rohrförmigen Träger (124) befestigt ist, der mittels eines Hubantriebs (128, 129) gegen die Werkstückebene zu- und rückstellbar ist, wobei der Träger abgedichtet an einem Rohr (131) für den Laserstrahl geführt ist.

19. Werkzeugmaschine nach Anspruch 18, dadurch gekennzeichnet, daß der Träger (124) mit einer Zahnstange (128) versehen ist, die mittels eines motorgetriebenen Ritzels (129) verschiebbar ist.

20. Werkzeugmaschine nach Anspruch 18 oder 19, dadurch gekennzeichnet, daß die Laser-Schneideinrichtung (20) mittels einer Gewindeverbindung (123) mit dem der Werkstückebene zugeordneten Ende des rohrförmigen Trägers (124) verschraubbar verbunden und mit einem Dreh-Antriebsmotor (127) gekuppelt ist.

21. Werkzeugmaschine nach Anspruch 20, dadurch gekennzeichnet, daß der Motor (127) ein Ritzel (126) antreibt, dessen Zähne mit denjenigen eines Zahnkranzes an der Laser-Schneideinrichtung (20) kämmen, wobei der rohrförmige Träger (124) verschiebbar aber undrehbar gelagert ist.

22. Werkzeugmaschine nach wenigstens einem der Ansprüche 18 bis 21, gekennzeichnet durch wenigstens eine, insbesondere bei angehobenem Stößel (14) von diesem freigegebene, radiale, mit einer Absaugleitung (122) strömungsverbundene Abgasöffnung (121) des Stanzkopfs (71) od. dgl.

23. Werkzeugmaschine nach wenigstens einem der Ansprüche 18 bis 22, gekennzeichnet durch ein zwischen die in Ruhestellung befindliche Laser-Schneideinrichtung (20) und einen Maschinentisch (8) einschieb- oder einschwenkbares Schutzschild (132) für die Laser-Schneideinrichtung, welches vorzugsweise gleichzeitig als Spänerutsche od. dgl. ausgebildet ist.

24. Werkzeugmaschine nach wenigstens einem der Ansprüche 1 bis 3, dadurch gekennzeichnet, daß der Laserstrahl (29) den Stanzkopf (71) od. dgl. in radialer Richtung durchsetzt und er vor dem Auftreffen auf der Linse (22) od. dgl. mittels eines Spiegels (32a, 94, 106, 115) in eine mit der geometrischen Achse des Stößels (14) zusammenfallende Richtung umgelenkt wird.

25. Werkzeugmaschine nach Anspruch 24, dadurch gekennzeichnet, daß der Spiegel (109) in der Außenecke eines winkelförmigen Kanals (110) oder einer Ausnehmung des Stößels (14) angeordnet ist.

26. Werkzeugmaschine nach Anspruch 24, dadurch gekennzeichnet, daß der Spiegel (94, 106) in der Außenecke eines winkelförmigen Kanals der Laser-Schneideinrichtung (20) angeordnet ist.

27. Werkzeugmaschine nach wenigstens einem der vorhergehenden Ansprüche, dadurch gekennzeichnet, daß sich die Linse od. dgl. in der Laser-Schneideinrichtung (20) befindet.

28. Werkzeugmaschine nach Anspruch 26, dadurch gekennzeichnet, daß sich die Linse (93) od. dgl. in einer radialen Bohrung des Stanzkopfs (71) od. dgl. befindet.

29. Werkzeugmaschine nach Anspruch 26, dadurch gekennzeichnet, daß sich die Linse an einer Spiegelhalterung (114) befindet, die in ein sich in Hubrichtung erstreckendes Langloch (113) des Stößels (14) eingreift, wobei in den dem freien Stößelende zugekehrten unteren Endbereich des Langlochs eine radiale Stößelbohrung (112) mündet, die bei zurückgezogenem Stößel mit einer weiteren Radialbohrung (111) des Stanzkopfs (71) fluchtet, welche eine Eintrittsbohrung für den Laserstrahl (29) ist, und daß sich an den unteren Endbereich des Langlochs (113) eine axiale, zentrische Stößelaustrittsbohrung anschließt.

30. Werkzeugmaschine nach Anspruch 29, dadurch gekennzeichnet, daß die axiale zentrische Stößelaustrittsbohrung zugleich die Aufnahme für einen Stanzstempel bildet oder zu dieser hinführt.

31. Werkzeugmaschine nach wenigstens einem der vorhergehenden Ansprüche, dadurch gekennzeichnet, daß zumindest der Spiegel (32a) der Laser-Schneideinrichtung (20), insbesondere aber alle Umlenkspiegel zwischen der Laser-Generator (31) und der Laser-Schneideinrichtung, mittels eines Kühlmittels kühlbar sind.

32. Werkzeugmaschine nach Anspruch 31, dadurch gekennzeichnet, daß am Stanzkopf (71) eine Kühlmittelleitung (91) befestigt ist, die über einen radialen Stanzkopfkanal und gegebenenfalls einen zwischengeschalteten weiteren Kanal mit einem Kühlkanal der Laser-Schneideinrichtung in Strömungsverbindung steht.

33. Werkzeugmaschine nach wenigstens einem der vorhergehenden Ansprüche, dadurch gekennzeichnet, daß eine Schneidgasleitung (56) am Stanzkopf (71) od. dgl. befestigt ist, die über einen radialen Stanzkopfkanal sowie einen weiterführenden Kanal der Laser-Schneideinrichtung (20) mit der Düse (23) in Strömungsverbindung steht.

34. Werkzeugmaschine nach wenigstens einem der Ansprüche 1 bis 3, gekennzeichnet durch einen in die Werkzeugaufnahme des Stößels (14) einwechselbare Laser-Schneideinrichtung (20) mit einem gleichzeitig als Fokussiereinrichtung dienenden parabolischen Umlenkspiegel (92), wobei ein winkelförmiger Kanal der Laser-Schneideinrichtung (20) über eine radiale Bohrung des Stößels (14) und eine beim Laserschneiden damit fluchtende Radialbohrung des Stanzkopfs (71) od. dgl. mit dem Lasergenerator (31) verbunden ist.

35. Werkzeugmaschine nach wenigstens einem der Ansprüche 1 bis 3, gekennzeichnet durch je eine am Stanzkopf befestigte Zuführungsleitung für das Gas und das Wasser für die Plasmaschneideinrichtung (140), die über Kanäle des Stanzkopfs und des Stößels (14) mit Anschlüssen der auswechselbaren Plasma-Schneideinrichtung (140) in Strömungsverbindung stehen, wenn der Stößel die für das Plasmaschneiden vorgegebene Hublage einnimmt.

36. Werkzeugmaschine nach Anspruch 35, gekennzeichnet durch eine flexible Leitung zwischen der Plasma-Schneideinrichtung (140) und einer Wasser-Absaugeinrichtung (157).

37. Werkzeugmaschine nach Anspruch 35 oder 36, dadurch gekennzeichnet, daß in einer insbesondere zentrischen Bohrung des Stößels (14) eine elektrische Leitung (156) isoliert verlegt ist, die zu einer Elektroden-Kupplung (164) am inneren Stößelende führt, und daß sich an der abnehmbaren Plasma-Schneideinrichtung (140) die Gegen-Kupplung befindet.

38. Werkzeugmaschine nach wenigstens einem der vorhergehenden Ansprüche, gekennzeichnet durch einen über dem Stanzkopf angeordneten Lasergenerator (33), dessen Austrittspiegel über der Stößelbohrung gelegen ist.

39. Werkzeugmaschine nach wenigstens einem der vorhergehenden Ansprüche, gekennzeichnet durch eine Werkzeug-Wechselvorrichtung (43, 56) zur Aufnahme von mechanischen Bearbeitungswerkzeugen (11, 12, 13) und wenigstens eine Laser-Schneideinrichtung (20) oder eine Plasma-Schneideinrichtung (140).

40. Werkzeugmaschine nach wenigstens einem der vorhergehenden Ansprüche, dadurch gekennzeichnet, daß die Werkzeug-Wechselvorrichtung (56) wenigstens einen Revolverteller od. dgl. (53, 54) aufweist.

## Claims

1. A machine tool for the selective machining of an in particular tabular workpiece by means of a mechanical machining tool or a thermal cutting means, the geometrical axis (42) of the cutting jet (29) in the working position of the thermal cutting means (20, 140) being coincident with the geometrical axis (41) of the mechanical machining tool (11, 12, 13) which is in the working position, characterised in that the mechanical machining tool is a multi-part stamping tool, its geometrical axis (41) being invariable, the thermal cutting means (20, 140), which is in particular constructed as a laser or plasma cutting torch, being inserted or capable of being inserted into one of the collets of the stamping tool (11, 12, 13) or being capable of being moved under the stamping head (71).

2. A machine tool according to Claim 1, characterised in that in their respective working positions, the working or feed direction (30) of the mechanical machining tool (11, 12, 13) and the direction of the thermal cutting jet (29) are opposite to each other.

3. A machine tool according to Claim 2, characterised in that the ram (14) is hollow and in that the end of the ram (14) which is opposite the housing (10) constitutes an inlet aperture for the laser beam (29) or the gas current for the plasma jet.

4. A machine tool according to Claim 2 or 3, characterised in that the thermal cutting means (20, 140) when in its rest position, is disposed above the inner end of the mechanical machining tool (11, 12, 13) or the die of a stamping tool and comprises a nozzle which can be extended in the working direction of the latter.

5. A machine tool according to Claim 4, characterised in that there is at the inner end of the extensible nozzle (23) a piston (81) which is displaceable in a double acting working cylinder (82), an inner tube in the working cylinder engaging in sealing-tight manner in the tubular nozzle (23), the inner tube forming a portion of the passage for the cutting jet.

6. A machine tool according to Claim 5, characterised in that the working cylinder (82) of the laser cutting means (20) is held in the head of the machine, particularly a stamping head (71), and projects centrally into the ram (14), this latter being of tubular construction, at least in this area.

7. A machine tool according to Claim 6, characterised in that on the head of the machine, particularly on the stamping head (71), there are connection bores (18, 19) for the hydraulic or pneumatic ram (14) or (83, 84) for the piston (81) of the laser cutting means (20) and which, in the working position of the laser cutting means, communicate at least partially in a flow carrying manner with onwardly extending passages in the ram (14).

8. A machine tool according to Claim 7, characterised in that on the head of the machine, particularly on the stamping head (71), there is a connection bore (56) for a cutting gas line to the laser cutting means and which, in the working position of the latter, communicates in a flow carrying manner with an onwardly extending passage in the ram (14).

9. A machine tool according to at least one of the preceding Claims, characterised by a device for adjusting the distance between the nozzle of the thermal cutting means or nozzle (23) of the laser cutting means (20) or the nozzle of the plasma cutting means (140) from the workpiece plane.

10. A machine tool according to Claim 9, characterised in that the ram (14) of the machine at the same time constitutes or carries a gap adjusting device.

11. A machine tool according to Claim 9, characterised in that the laser cutting means (20) is fixed on a scraper (12) of a stamping tool or a support therefor, the scraper or its support being connected to an adjusting drive (87, 88, 90) for the gap adjusting device.

12. A machine tool according to Claim 11, characterised in that the scraper (12) or the support thereof is supported on the stamping head (71) or the like by means of a screw-threaded connection (85, 86) and in that it can be adjusted by means of a motor (90) and a gear mechanism (87, 88).

13. A machine tool according to Claim 9, characterised in that the laser cutting means (20) is mounted on a support (24) mounted on the stamping head (71) or the like and adapted to be advanced parallel with the cutting direction, the support being connected to a displacement drive (98, 99, 100).

14. A machine tool according to Claim 13, characterised in that the displacement drive of the support (94) of the laser cutting means (20) consists of a rack (98) on the support and a pinion (99) which can be driven by means of a motor (100).

15. A machine tool according to Claim 13 or 14, characterised in that the support (94) of the laser cutting means consists of a stem rotatable and displaceable in a tubular housing (93) attached to or swaged on the stamping head (71) or the like and comprises a lateral arm carrying at least the laser nozzle (23), the stem being connected to a pivot drive (95, 96, 97) for moving the nozzle (23) from the working position into an inoperative position and vice versa.

16. A machine tool according to Claim 15, characterised in that the pivot drive of the support (94) consists of a gear ring (95) on the stem and a pinion (96) adapted to be driven by means of a motor (97), the width of the gear ring (95) exceeding that of the pinion (96) by about the height of lift of the support (94).

17. A machine tool according to Claim 15 or 16, characterised in that inside the support (94) is a portion of passage for the laser beam (29) and three deflecting mirrors (101, 102, 104) and a lens (103) or the like, the portion of passage communicating with a feed passage (118) when the nozzle (23) is in the working position.

18. A machine tool according to Claim 2 and 9, characterised in that the laser cutting means (20) is mounted on a tubular carrier (124) which can be advanced towards and retracted from the workpiece plane by means of a lifting drive (128, 129), the carrier being guided in sealing-tight manner on a tube (131) for the laser beam.

19. A machine tool according to Claim 18, characterised in that the carrier (124) is provided with a rack (128) which is displaceable by means of a motor-driven pinion (129).

20. A machine tool according to Claim 18 or 19, characterised in that by means of a screw-threaded connection (123), the laser cutting means (20) is connected in screwable fashion to that end of the tubular carrier (124) which is associated with the workpiece plane, and is coupled to a rotary drive motor (127).

21. A machine tool according to Claim 20, characterised in that the motor (127) drives a pinion (126), the teeth of which mesh with those of a gear ring on the laser cutting means (20), the tubular carrier (124) being displaceably but non-rotatably mounted.

22. A machine tool according to at least one of Claims 18 to 21, characterised by at least one radial waste gas aperture (121) of the stamping head (71) or the like, which is exposed by the ram (14), particularly when the latter is raised, and is connected in a flow-carrying manner to an extraction line (122).

23. A machine tool according to at least one of Claims 18 to 22, characterised by a protective shield (132) for the laser cutting means, disposed between the laser cutting means (20) which is in the inoperative position and a machine table (8) in such a way that it can be pushed or swung into operation and which preferably is at the same time constructed as a chippings chute or the like.

24. A machine tool according to at least one of Claims 1 to 3, characterised in that the laser beam (29) traverses the stamping head (71) or the like in a radial direction and, prior to striking the lens (22) or the like, is deflected by a mirror (32a, 94, 106, 115) into a direction which coincides with the geometrical axis of the ram (14).

25. A machine tool according to Claim 24, characterised in that the mirror (109 ? — illegible in the original) is disposed in the outer corner of an angular passage (110) or a recess in the ram (14).

26. A machine tool according to Claim 24, characterised in that the mirror (94, 106) is disposed in the outer corner of an angular passage in the laser cutting means (20).

27. A machine tool according to at least one of the preceding Claims, characterised in that the lens or the like is disposed in the laser cutting means (20).

28. A machine tool according to Claim 26, characterised in that the lens (93) or the like is disposed in a radial bore in the stamping head (71) or the like.

29. A machine tool according to Claim 26, characterised in that the lens is disposed on a mirror support (114) which engages an elongated hole (113) in the ram (14), which extends in the direction of lift, a radial bore (112) in the ram opening out into the bottom end portion of the elongated hole which is towards the free end of the ram, the bore (112) being aligned with a further radial bore (111) of the stamping head (71) when the ram is retracted, being an inlet bore for the laser beam (29), and in that adjacent to the bottom end portion of the elongated hole (113) there is an axial central ram outlet bore.

30. A machine tool according to Claim 29, characterised in that the axial central ram outlet bore at the same time is leads to the housing for stamping die.

31. A machine tool according to at least one of the preceding Claims, characterised in that at least the mirror (32a) of the laser cutting means (20) but in particular all the deflecting mirrors between the laser generator (31) and the laser cutting means, can be cooled by means of a coolant.

32. A machine tool according to Claim 31, characterised in that attached to the stamping head (71) is a coolant line (91) which communicates in a flow carrying manner with a coolant channel of the laser cutting means via a radial stamping head passage and possibly a further interposed passage.

33. A machine tool according to at least one of the preceding Claims, characterised in that a cutting gas line (56) is attached to the stamping head (71) or the like and communicates in a flow carrying manner with the nozzle (23) via a radial passage in the stamping head and an onwardly extending passage in the laser cutting means (20).

34. A machine tool according to at least one of Claims 1 to 3, characterised by a laser cutting means (20) adapted to be interchanged in the tool holder of the ram (14), with, serving at the same time as a focusing means, a parabolic deflecting mirror (92), an angular passage in the laser cutting means (20) being connected to the laser generator (31) via a radial bore in the ram (14) and a radial bore in the stamping head (71) or the like which is aligned therewith during laser cutting.

35. A machine tool according to at least one of Claims 1 to 3, characterised by, fixed on the stamping head, a feed line for the gas and water for the plasma cutting means (140), which communicate in a flow carrying manner with connections on the interchangeable plasma cutting means (140) via passages in the stamping head and in the ram (14), when the ram assumes the raised position which is intended for plasma cutting.

36. A machine tool according to Claim 35, characterised by a flexible line between the plasma cutting means (140) and a water extraction means (157).

37. A machine tool according to Claim 35 or 36, characterised in that insulated in a (particularly) central bore in the ram (14) there is an electrical conductor (156) which leads to an electrode coupling (164) on the inner end of the ram and in that the matching coupling is disposed on the removable plasma cutting means (140).

38. A machine tool according to at least one of the preceding Claims, characterised by, disposed above the stamping head, a laser generator (33), of which the outlet mirror is placed above the ram bore.

39. A machine tool according to at least one of the preceding Claims, characterised by a tool changing device (43, 56) for holding mechanical machining tools (11, 12, 13) and at least one laser cutting means (20) or a plasma cutting means (140).

40. A machine tool according to at least one of the preceding Claims, characterised in that the tool changing device (56) comprises at least one rotating plate or the like (53, 54).

## Revendications

1. Machine-outil pour façonner sélectivement une pièce à usiner, notamment en forme de plaque, au moyen d'un outil d'usinage mécanique ou d'un dispositif de coupe thermique, l'axe géométrique (42) du rayon de coupe (29) coïncidant, dans la position de travail du dispositif de coupe thermique (20, 140), avec l'axe géométrique (41) de l'outil d'usinage mécanique (11, 12, 13) occupant la position de travail, caractérisée par le fait que l'outil d'usinage mécanique est un outil d'estampage en plusieurs parties et son axe géométrique (41) est invariable, le dispositif de coupe thermique (20, 140), notamment réalisé sous la forme d'un dispositif de coupe au laser ou au plasma, étant inséré ou insérable dans l'un des logements de l'outil d'estampage (11, 12, 13), ou bien étant mobile au-dessous de la tête d'estampage (71).

2. Machine-outil selon la revendication 1, caractérisée par le fait que, dans la position de travail considérée, la direction respective (30) de travail ou d'avance de l'outil d'usinage mécanique (11, 12, 13) et la direction de rayonnement du rayon de coupe thermique (29) sont orientées à l'opposé l'une de l'autre.

3. Machine-outil selon la revendication 2, caractérisée par le fait que le coulisseau (14) est creux, et l'extrémité de ce coulisseau (14) qui est opposée au logement (10) forme un orifice de pénération du rayon laser (29) ou du flux gazeux pour le jet de plasma.

4. Machine-outil selon la revendication 2 ou 3, caractérisée par le fait que, dans sa position de repos, le dispositif de coupe thermique (20, 140) se trouve au-dessus de l'extrémité interne de l'outil d'usinage mécanique (11, 12, 13), respectivement du poinçon d'un outil d'estampage, et présente une buse pouvant être sortie dans la direction de travail de ce dernier.

5. Machine-outil selon la revendication 4, caractérisée par le fait qu'un piston (81), situé à l'extrémité interne de la buse déployable (23), peut coulisser dans un cylindre de travail (82) à double action, un tube intérieur du cylindre de travail pénétrant de manière étanche dans la buse tubulaire (23), et ce tube intérieur formant un tronçon de canal pour le rayon de coupe.

6. Machine-outil selon la revendication 5, caractérisée par le fait que le cylindre de travail (82) du dispositif de coupe au laser (20) est retenu dans la tête de la machine, notamment une tête d'estampage (71), et s'engage centralement dans le coulisseau (14) qui, au moins dans cette région, est de réalisation tubulaire.

7. Machine-outil selon la revendication 6, caractérisée par le fait que des perçages respectifs de raccordement (18, 19) du coulisseau hydraulique ou pneumatique (14), ou de raccordement (83, 84) du piston (81) du dispositif de coupe au laser (20), ménagés sur la tête de la machine, notamment sur la tête d'estampage (71), sont au moins partiellement en liaison d'écoulement, dans la position de travail du dispositif de coupe au laser, avec des canaux de continuation pratiqués dans le coulisseau (14).

8. Machine-outil selon la revendication 7, caractérisée par le fait qu'un perçage (56) de raccordement d'une conduite à gaz de coupe du dispositif de coupe au laser, ménagé sur la tête de la machine, en particulier sur la tête d'estampage (71), est en liaison d'écoulement, dans la position de travail dudit dispositif, avec un canal de continuation pratiqué dans le coulisseau (14).

9. Machine-outil selon au moins l'une des revendications précédentes, caractérisée par un dispositif de réglage de la distance comprise entre le plan de la pièce à usiner et la buse du dispositif de coupe thermique, respectivement la buse (23) du dispositif de coupe au laser (20), ou la buse du dispositif de coupe au plasma (140).

10. Machine-outil selon la revendication 9, caractérisée par le fait que le coulisseau (14) de la machine forme ou porte simultanément un dispositif de réglage de distances.

11. Machine-outil selon la revendication 9, caractérisée par le fait que le dispositif de coupe au laser (20) est fixé à un arracheur (12) d'un outil d'estampage ou bien à un support associé à cet arracheur, l'arracheur ou son support étant relié à un entraînement (87, 88, 90) d'ajustement du dispositif de réglage de distances.

12. Machine-outil selon la revendication 11, caractérisée par le fait que l'arracheur (12) ou son support est respectivement retenu, au moyen d'une solidarisation filetée (85, 86), sur la tête d'estampage (71) ou élément similaire, et peut être respectivement ajusté au moyen d'un moteur (90) et d'une transmission (87, 88).

13. Machine-outil selon la revendication 9, caractérisée par le fait que le dispositif de coupe au laser (20) est fixé à un support (94) qui est monté sur la tête d'estampage (71) ou élément similaire, peut être présenté parallèlement à la direction de coupe, et est relié à un entraînement en coulissement (98, 99, 100).

14. Machine-outil selon la revendication 13, caractérisée par le fait que l'entraînement en coulissement du support (94) du dispositif de coupe au laser (20) se compose d'une crémaillère (98) du support, et d'un pignon (99) pouvant être entraîné au moyen d'un moteur (100).

15. Machine-outil selon la revendication 13 ou 14, caractérisée par le fait que le support (94) du dispositif de coupe au laser consiste en une tige pouvant coulisser et tourner dans un carter tubulaire (93) fixé ou ménagé solidairement sur la tête d'estampage (71) ou élément similaire, avec une avancée latérale en porte-à-faux qui porte au moins la buse à laser (23), la tige étant reliée à un entraînement en pivotement (95, 96, 97) afin de faire passer la buse (23) de la position de travail à une position de repos, et inversement.

16. Machine-outil selon la revendication 15, caractérisée par le fait que l'entraînement en pivotement du support (94) comprend une couronne dentée (95) de la tige et un pignon (96) pouvant être entraîné au moyen d'un moteur (97), la largeur de la couronne dentée (95) excédant celle du pignon (96), d'environ la hauteur de course du support (94).

17. Machine-outil selon la revendication 15 ou 16, caractérisée par le fait que l'espace interne du support (94) renferme un tronçon de canal pour le rayon laser (29) et trois miroirs déflecteurs (101, 102, 104) ainsi qu'une lentille (103) ou pièce similaire, et le tronçon de canal est en communication avec un canal d'arrivée (118) dans la position de travail de la buse (23).

18. Machine-outil selon les revendications 2 et 9, caractérisée par le fait que le dispositif de coupe au laser (20) est fixé à un support tubulaire (124), pouvant être présenté au plan de la pièce à usiner et en être éloigné au moyen d'un entraînement de levage (128, 129), le support étant guidé, de manière étanche, dans un tube (131) destiné au rayon laser.

19. Machine-outil selon la revendication 18, caractérisée par le fait que le support (124) est doté d'une crémaillère (128), à laquelle des coulissements peuvent être imprimés au moyen d'un pignon (129) à entraînement motorisé.

20. Machine-outil selon la revendication 18 ou 19, caractérisée par le fait que le dispositif de coupe au laser (20) est relié avec faculté de vissage, au moyen d'une solidarisation filetée (123), à l'extrémité du support tubulaire (124) qui est associée au plan de la pièce à usiner, et est accouplé à un moteur (127) d'entraînement en rotation.

21. Machine-outil selon la revendication 20, caractérisée par le fait que le moteur (127) mène un pignon (126) dont les dents sont en prise avec celles d'une couronne dentée située sur le dispositif de coupe au laser (20), le support tubulaire (124) étant monté avec faculté de coulissement, mais sans faculté de rotation.

22. Machine-outil selon au moins l'une des revendications 18 à 21, caractérisée par au moins un orifice radial (121) d'échappement gazeux de la tête d'estampage (71) ou élément similaire, qui est en liaison d'écoulement avec un conduit (122) d'évacuation par aspiration, et est notamment dégagé par le coulisseau (14) lorsque celui-ci est soulevé.

23. Machine-outil selon au moins l'une des revendications 18 à 22, caractérisée par un tablier (132) protecteur du dispositif de coupe au laser, qui peut être rentré par coulissement ou par pivotement entre un plateau (8) de la machine et le dispositif de coupe au laser (20) occupant la position de repos, et est simultanément réalisé, de préférence, sous la forme d'un toboggan à copeaux ou organe similaire.

24. Machine-outil selon au moins l'une des revendications 1 à 3, caractérisée par le fait que le rayon laser (29) traverse la tête d'estampage (71) ou élément similaire dans le sens radial et est dévié, avant de rencontrer la lentille (22) ou pièce similaire, au moyen d'un miroir (32a, 94, 106, 115), dans une direction coïncidant avec l'axe géométrique du coulisseau (14).

25. Machine-outil selon la revendication 24, caractérisée par le fait que le miroir (109) est disposé dans le coin extérieur d'un canal en cornière (110), ou bien dans un évidement du coulisseau (14).

26. Machine-outil selon la revendication 24, caractérisée par le fait que le miroir (94, 106) est disposé dans le coin extérieur d'un canal en cornière du dispositif de coupe au laser (20).

27. Machine-outil selon au moins l'une des revendications précédentes, caractérisée par le fait que la lentille ou pièce similaire se trouve dans le dispositif de coupe au laser (20).

28. Machine-outil selon la revendication 26, caractérisée par le fait que la lentille (93) ou pièce similaire se trouve dans un perçage radial de la tête d'estampage (71) ou élément similaire.

29. Machine-outil selon la revendication 26, caractérisée par le fait que la lentille se trouve dans un porte-miroir (114) qui pénètre dans un trou oblong (113) du coulisseau (14), s'étendant dans la direction de levage, un perçage radial (112) du coulisseau, débouchant dans la région extrême inférieure du trou oblong qui est tournée vers l'extrémité libre du coulisseau, étant aligné, lorsque le coulisseau est rétracté, avec un autre perçage radial (111) qui est ménagé dans la tête d'estampage (71) et constitue un perçage d'entrée du rayon laser (29) ; et par le fait qu'un perçage central axial de sortie du coulisseau se trouve dans la continuité directe de la région extrême inférieure du trou oblong (113).

30. Machine-outil selon la revendication 29, caractérisée par le fait que le perçage central axial de sortie du coulisseau forme simultanément le logement d'un poinçon d'estampage, ou bien gagne ce logement.

31. Machine-outil selon au moins l'une des revendications précédentes, caractérisée par le fait qu'au moins le miroir (32a) du dispositif de coupe au laser (20), mais en particulier tous les miroirs déflecteurs situés entre le générateur laser (31) et le dispositif de coupe au laser, peuvent être refroidis au moyen d'un fluide de refroidissement.

32. Machine-outil selon la revendication 31, caractérisée par le fait qu'une conduite (91) à fluide de refroidissement, fixée à la tête d'estampage (71), est en liaison d'écoulement avec un canal de refroidissement du dispositif de coupe au laser, par l'intermédiaire d'un canal radial de la tête d'estampage et, éventuellement, d'un autre canal intercalaire.

33. Machine-outil selon au moins l'une des revendications précédentes, caractérisée par le fait qu'une conduite (56) à gaz de coupe, fixée à la tête d'estampage (71) ou élément similaire, est en liaison d'écoulement avec la buse (23) par l'intermédiaire d'un canal radial de la tête d'estampage, ainsi que d'un canal de continuation du dispositif de coupe au laser (20).

34. Machine-outil selon au moins l'une des revendications 1 à 3, caractérisée par un dispositif de coupe au laser (20) interchangeable dans le logement d'outillage du coulisseau (14), avec un miroir déflecteur parabolique (92) qui sert simultanément de dispositif de focalisation, un canal en cornière du dispositif de coupe au laser (20) étant relié au générateur laser (31) par l'intermédiaire d'un perçage radial du coulisseau (14), et d'un perçage radial de la tête d'estampage (71) ou élément similaire, coïncidant avec le perçage précité lors de la découpe au laser.

35. Machine-outil selon au moins l'une des revendications 1 à 3, caractérisée par une conduite respective d'amenée, fixée à la tête d'estampage, pour le gaz et l'eau destinés au dispositif de coupe au plasma (140), qui sont en liaison d'écoulement par l'intermédiaire de canaux de la tête d'estampage et du coulisseau (14), lorsque ce coulisseau prend lors de sa course la position préétablie pour la découpe au plasma, avec des raccords du dispositif interchangeable de découpe au plasma (140).

36. Machine-outil selon la revendication 35, caractérisée par une conduite flexible entre le dispositif de coupe au plasma (140) et un dispositif (157) d'évacuation d'eau par aspiration.

37. Machine-outil selon la revendication 35 ou 36, caractérisée par le fait qu'un conducteur électrique (156), implanté avec isolation dans un perçage notamment central du coulisseau (14), gagne un accouplement (164) d'électrode à l'extrémité interne du coulisseau ; et par le fait que l'accouplement complémentaire se trouve sur le dispositif amovible de découpe au plasma (140).

38. Machine-outil selon au moins l'une des revendications précédentes, caractérisée par un générateur laser (33) qui est disposé au-dessus de la tête d'estampage, et dont le miroir de sortie est placé au-dessus du perçage du coulisseau.

39. Machine-outil selon au moins l'une des revendications précédentes, caractérisée par un dispositif (43, 56) échangeur d'outillage, destiné à recevoir des outils d'usinage mécaniques (11, 12, 13), et par au moins un dispositif de coupe au laser (20) ou un dispositif de coupe au plasma (140).

40. Machine-outil selon au moins l'une des revendications précédentes, caractérisée par le fait que le dispositif (56) échangeur d'outillage présente au moins un plateau revolver ou élément similaire (53, 54).

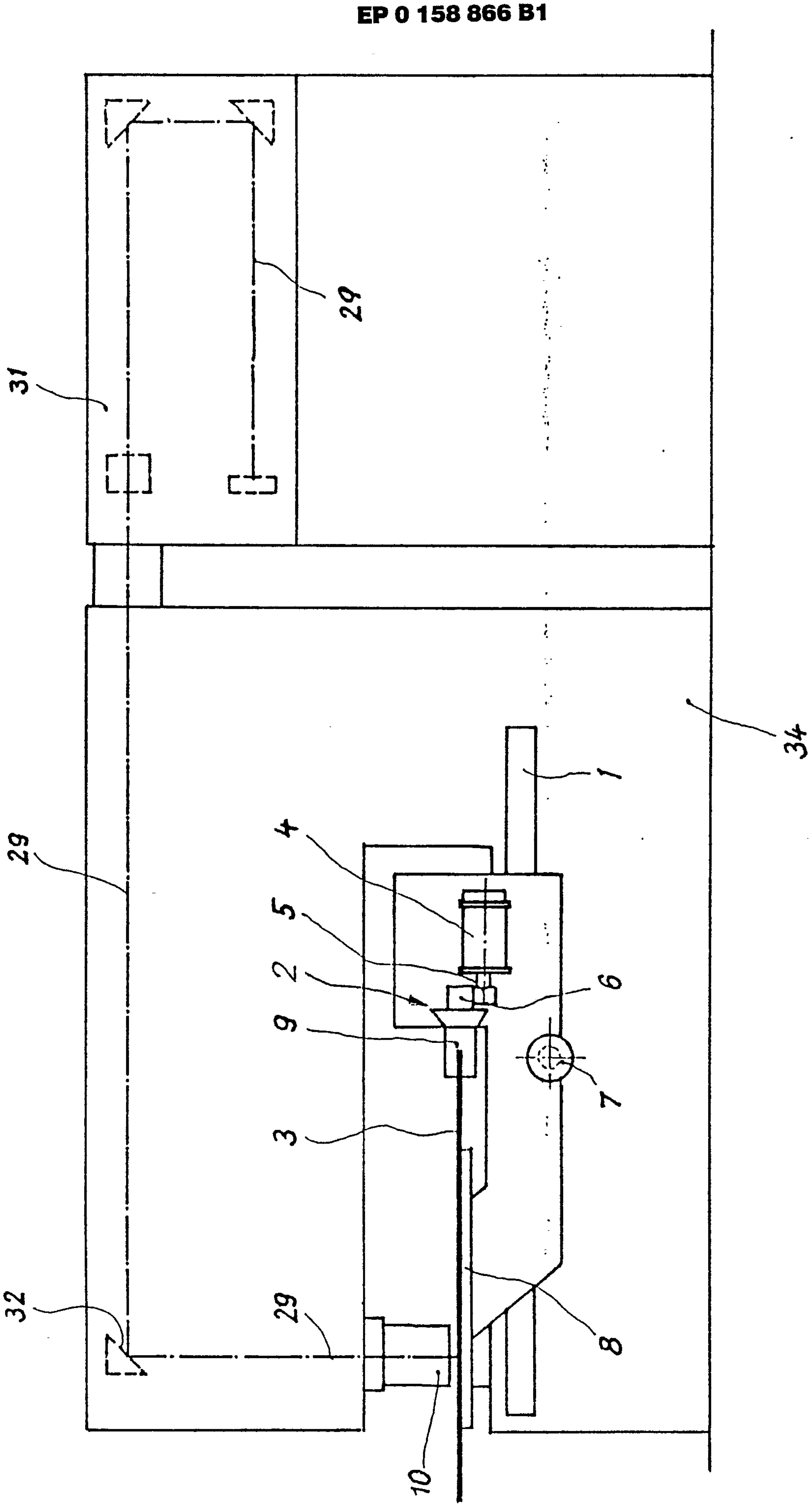


Fig. 1

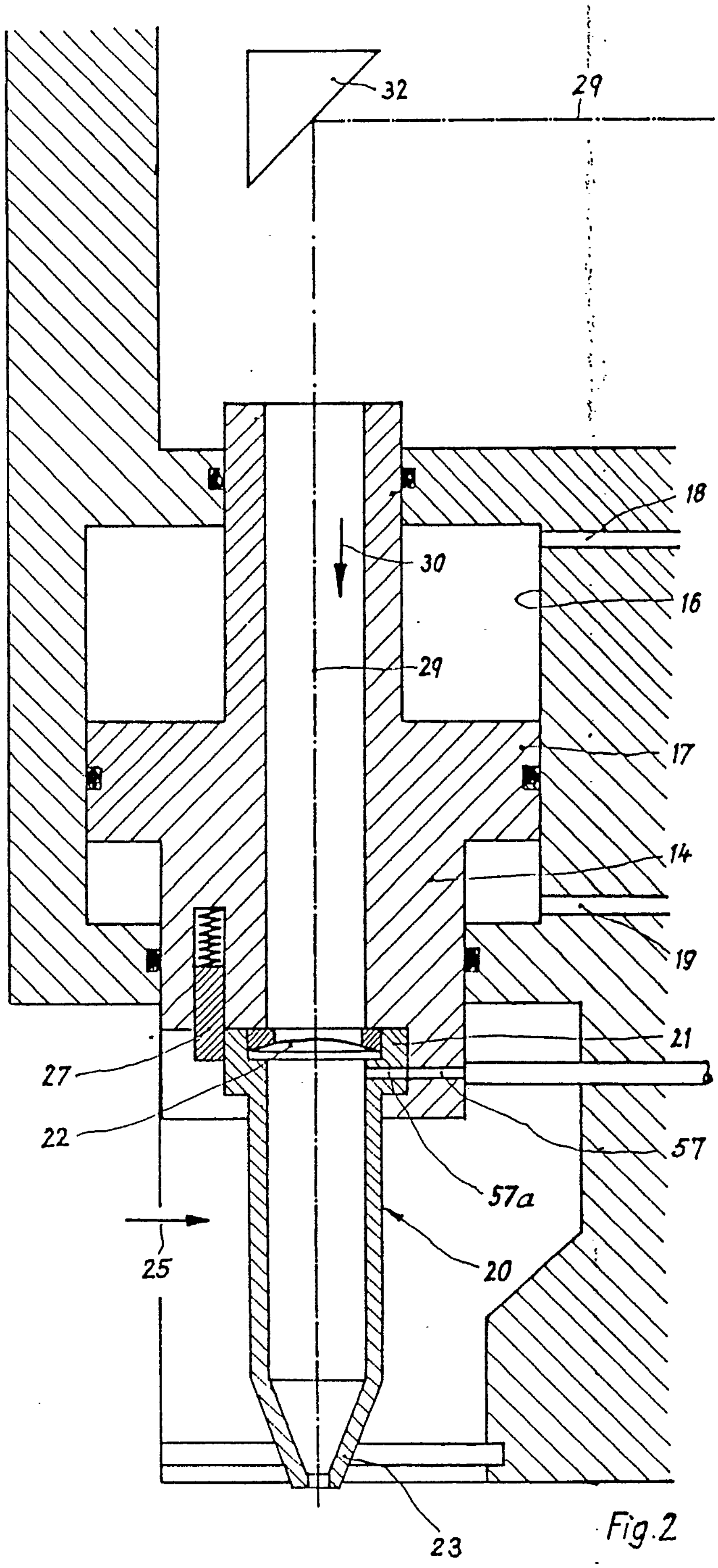


Fig.2

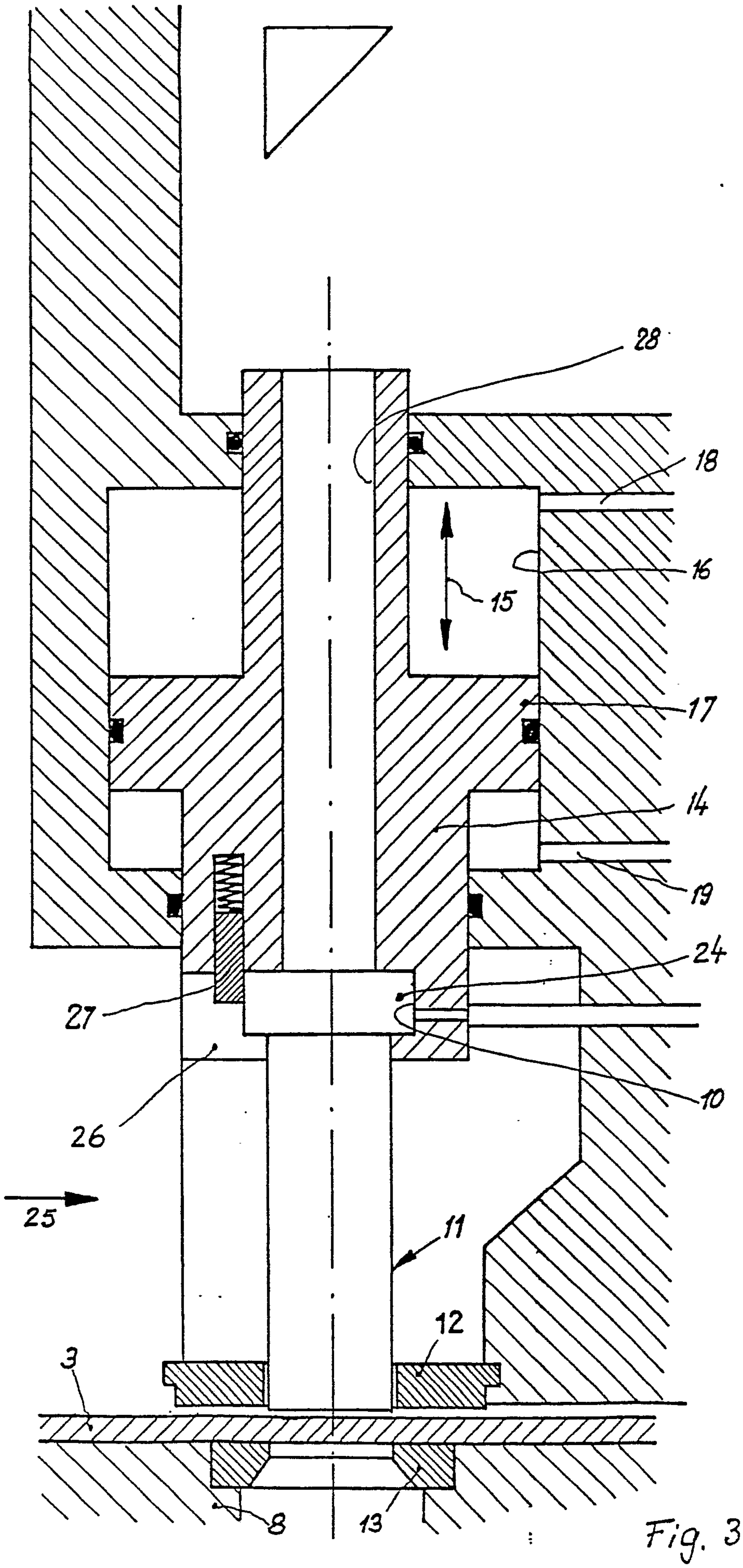


Fig. 3

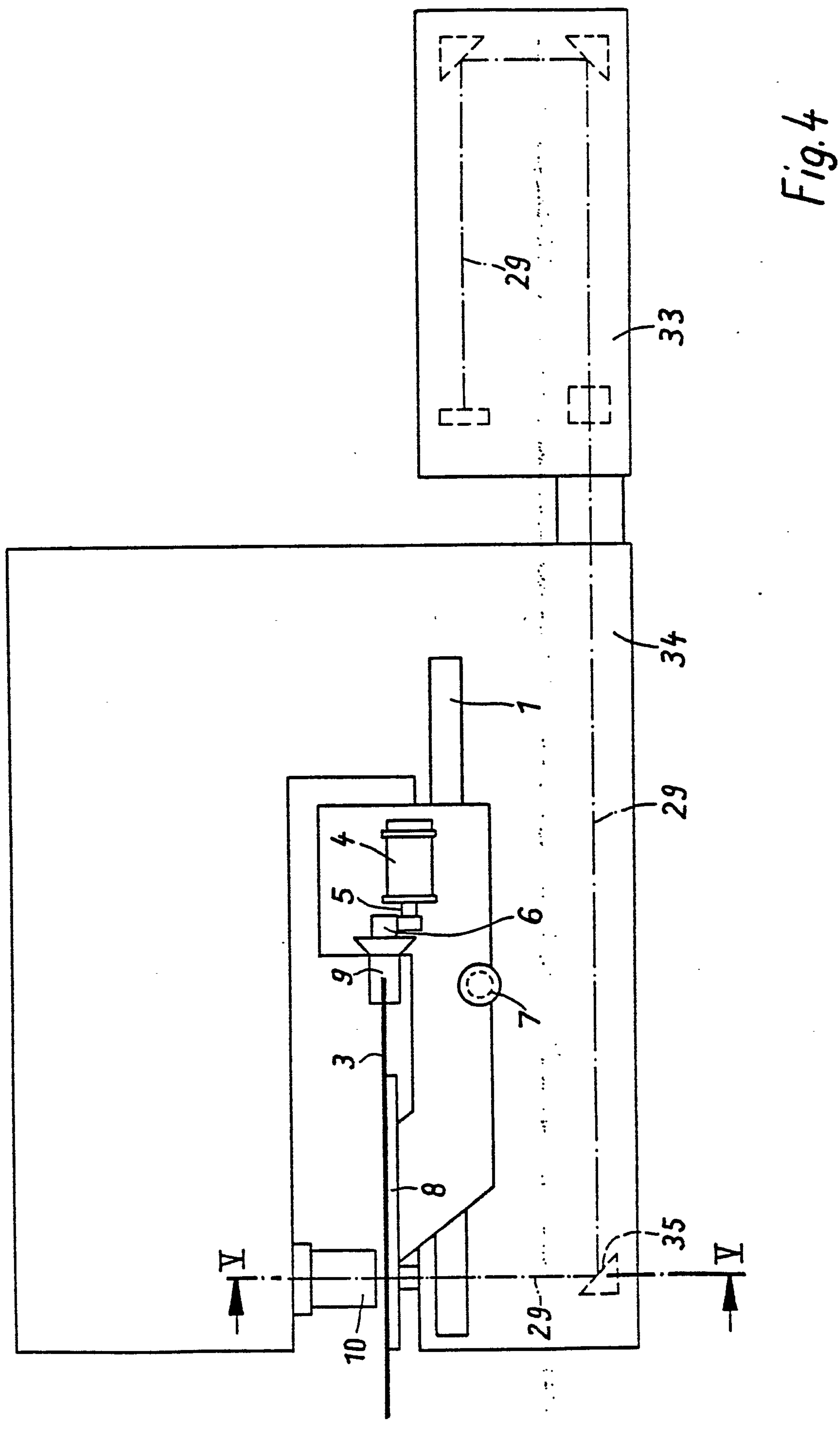
Fig.4
29
33
34
1
29
4
5
6
9
7
3
8
35
V
V
29
10

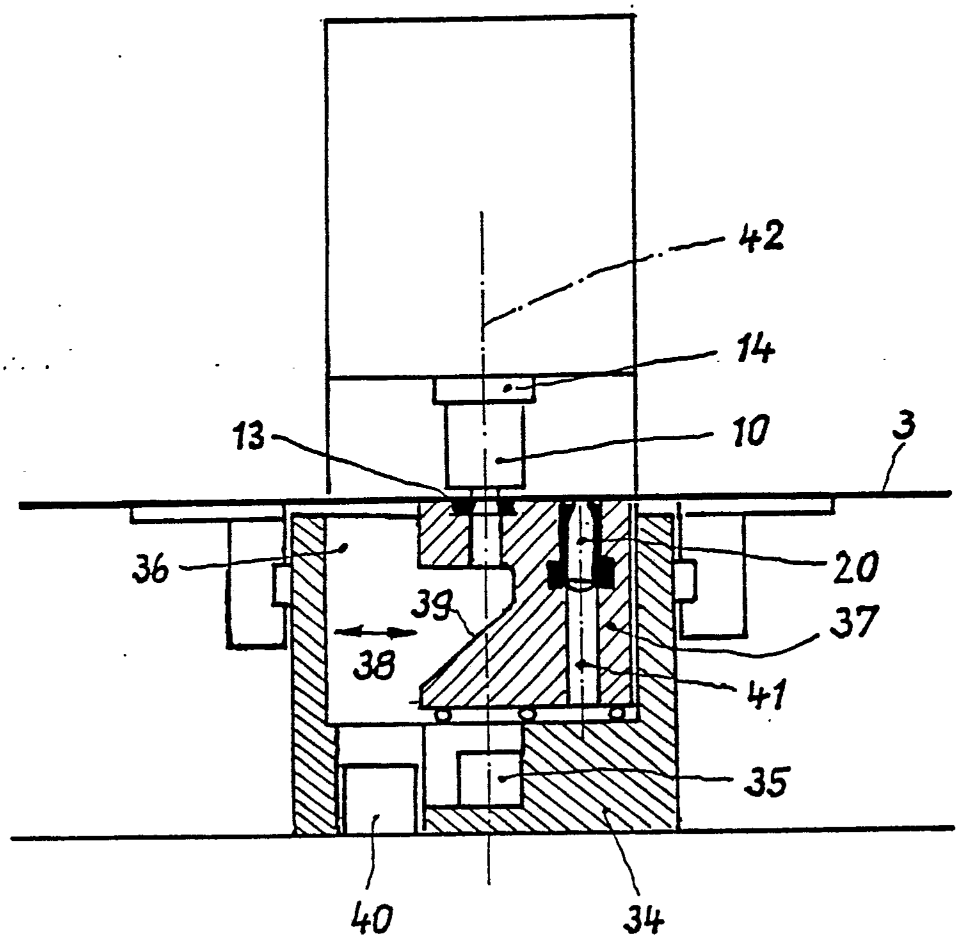


Schnitt V-V

Fig. 5

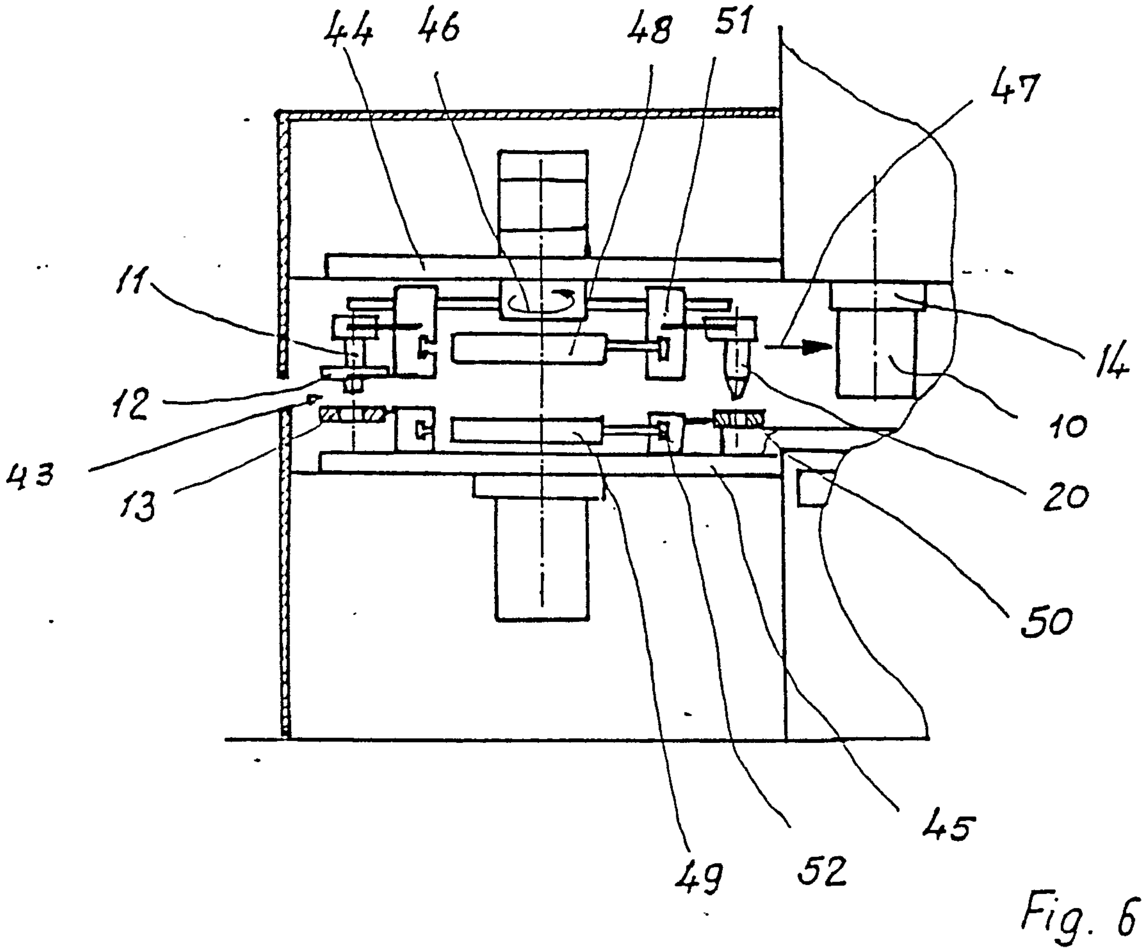


Fig. 6

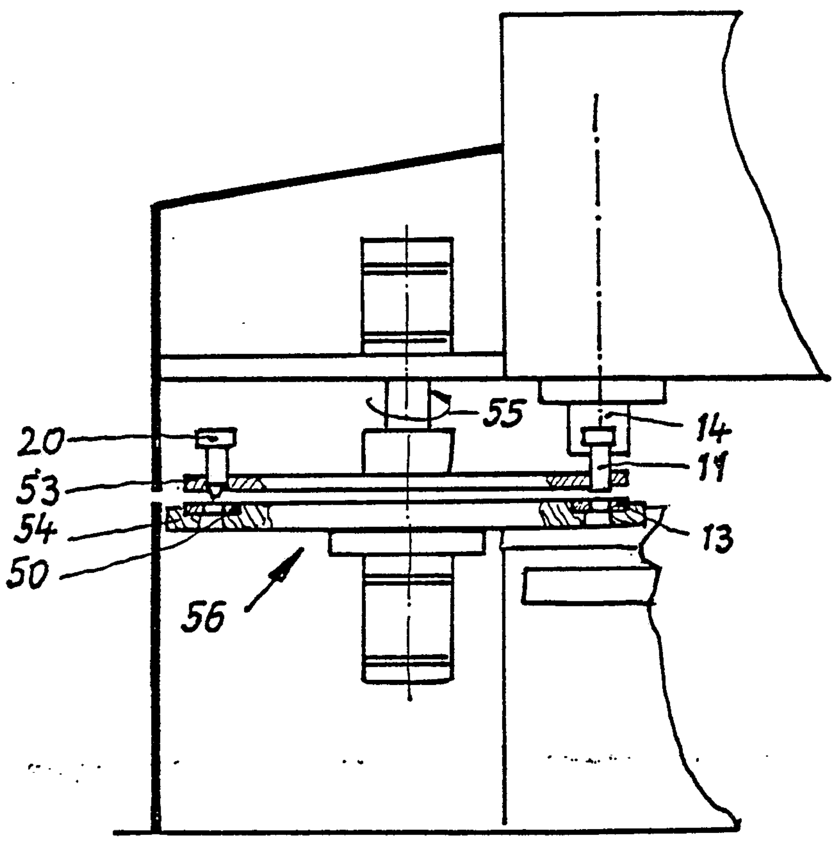


Fig. 7

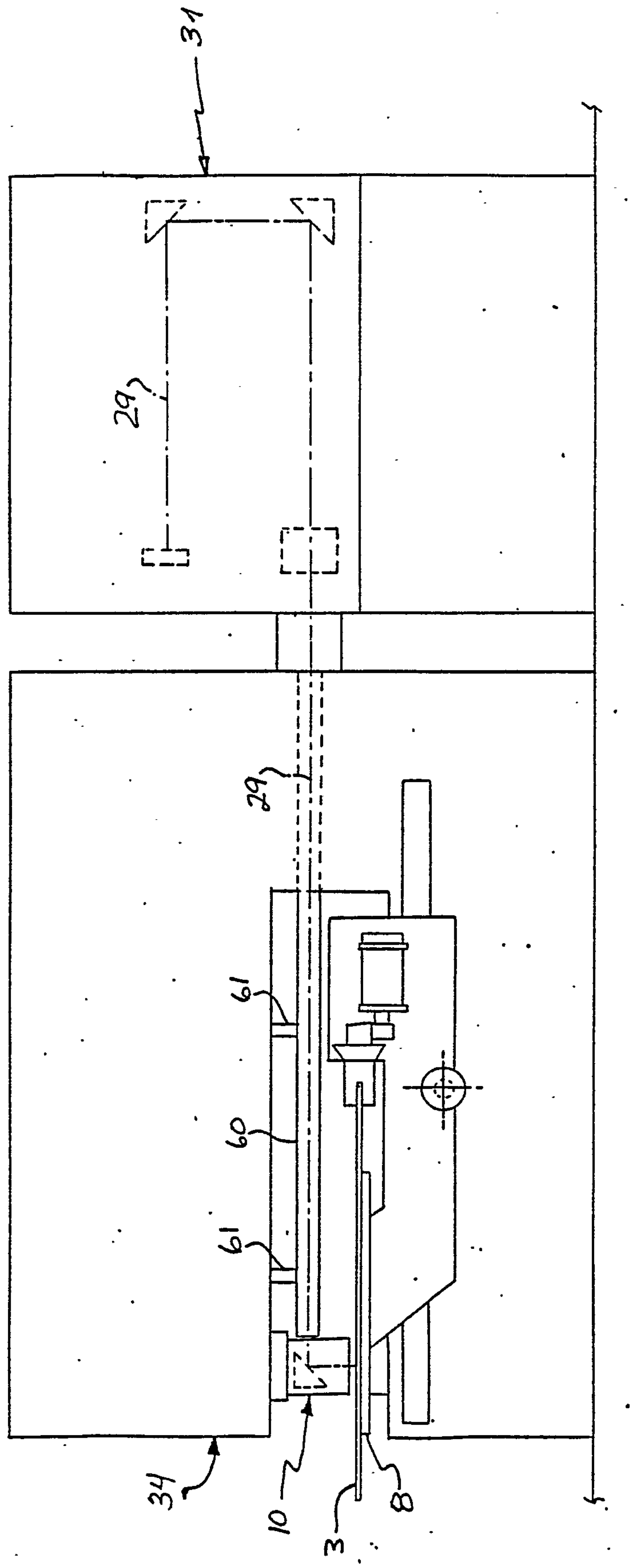


FIG. 8

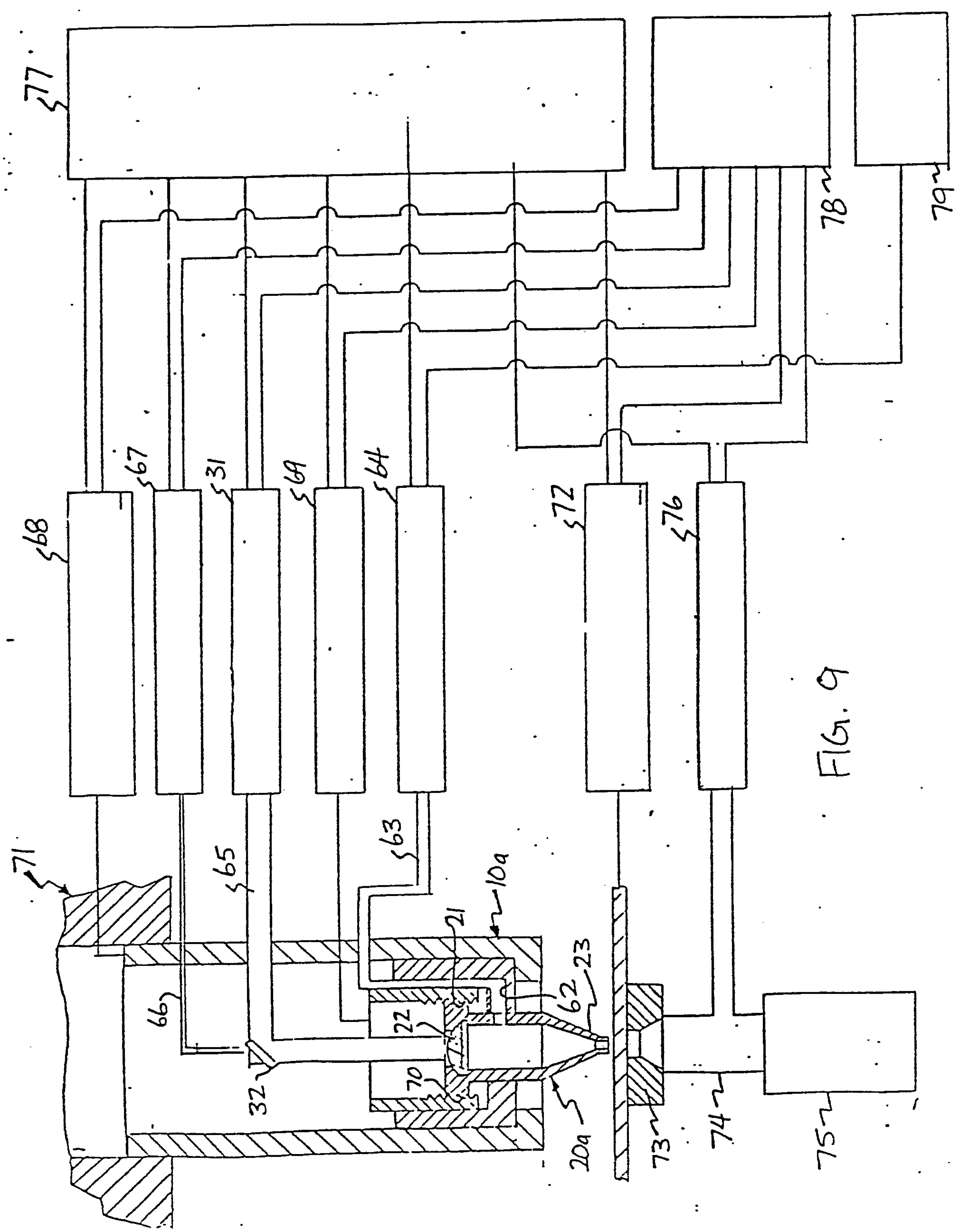
77
78
79
68
67
31
69
64
72
76
71
65
63
10a
21
23
62
22
66
32
70
20a
73
74
75

FIG. 9

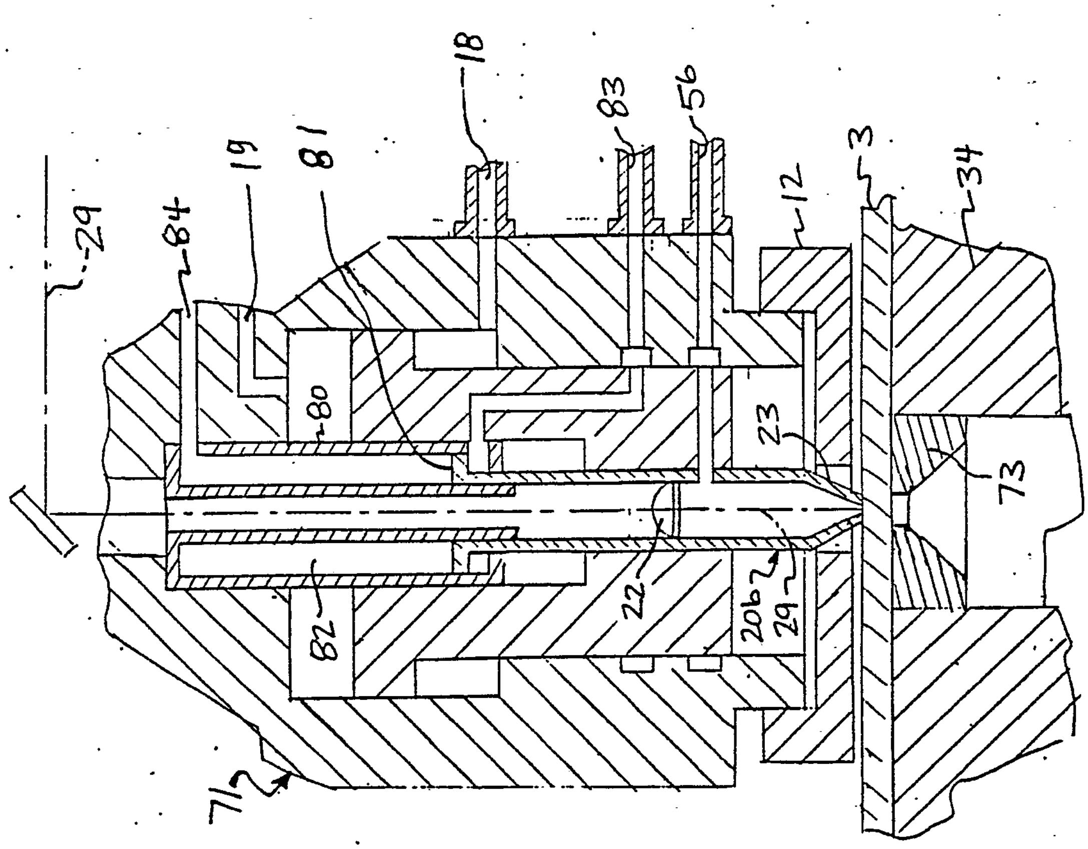
18
83
56
3
34
12
29
84
19
81
80
23
73
22
20b
29
82
71

FIG. 11

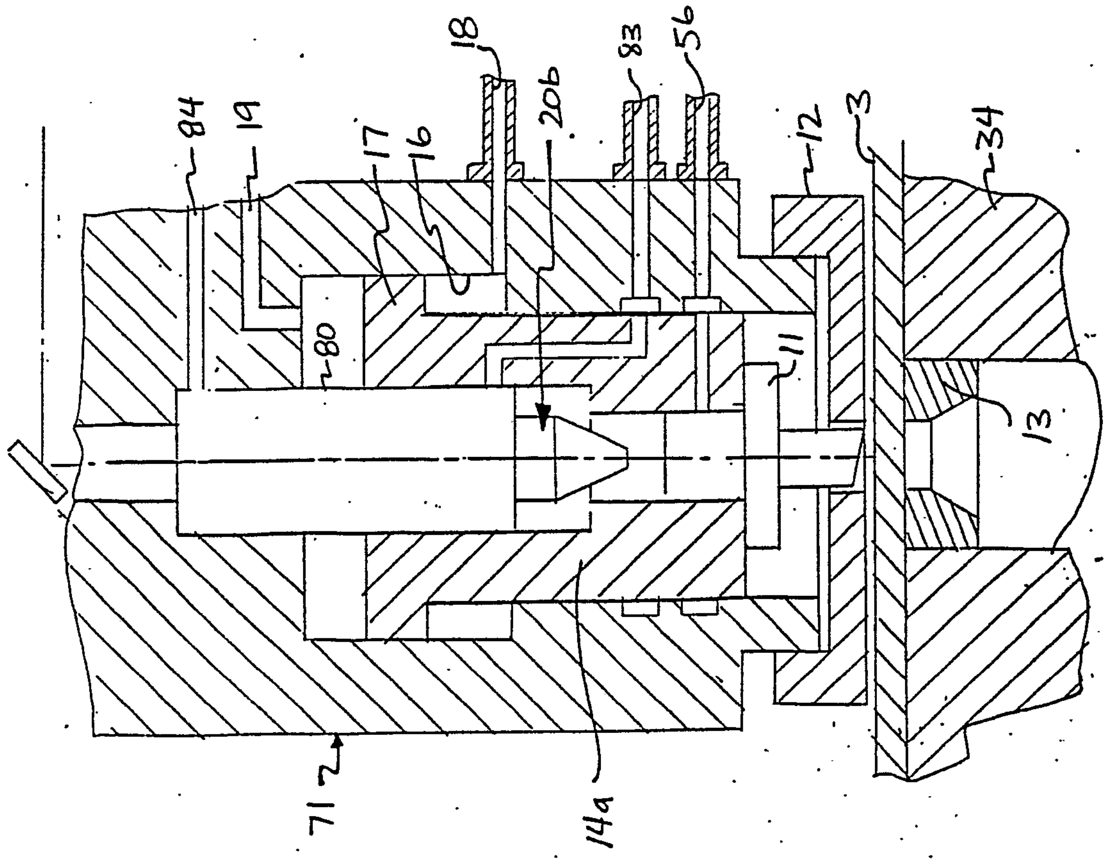
84
19
17
16
18
20b
83
56
12
3
34
80
11
13
71
14a

FIG. 10

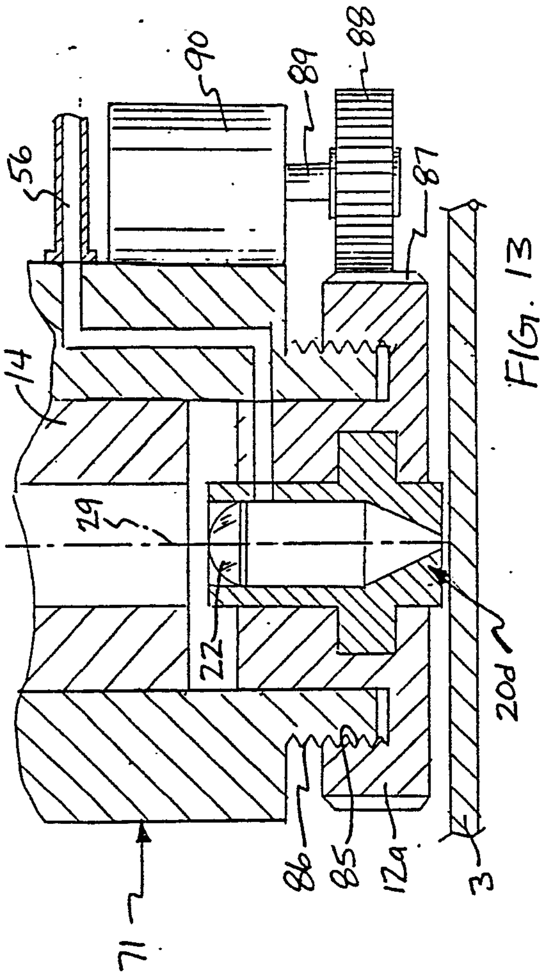


FIG. 13

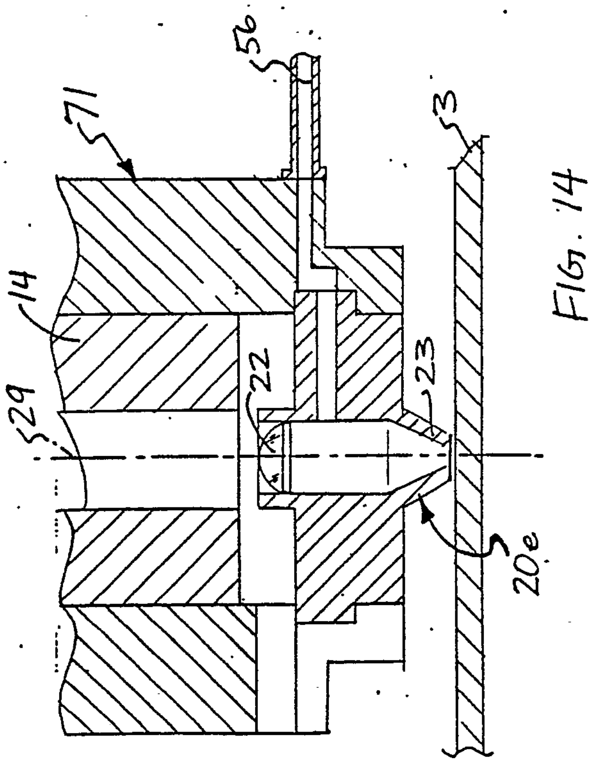


FIG. 14

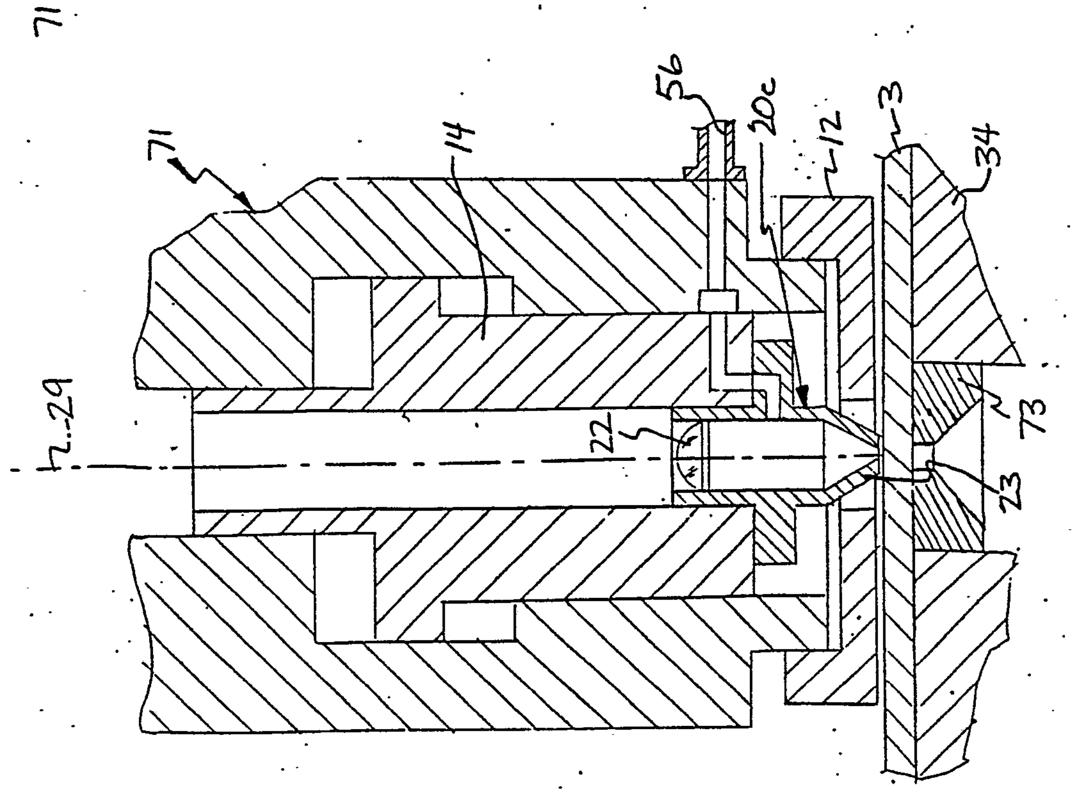


FIG. 12

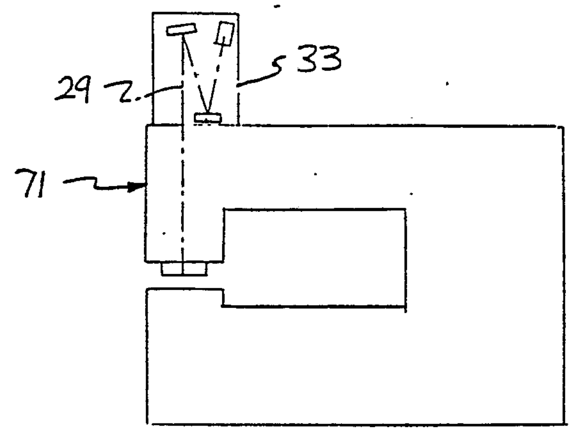


FIG. 15

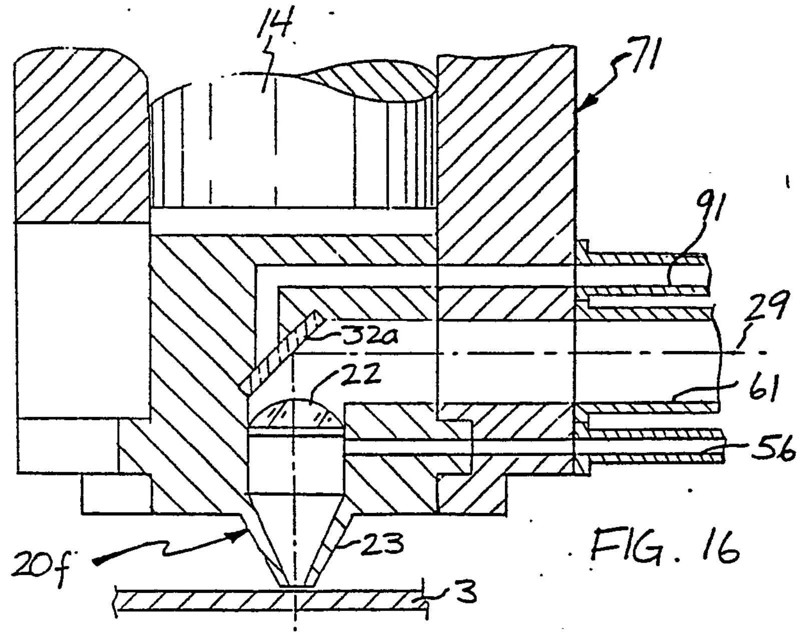


FIG. 16

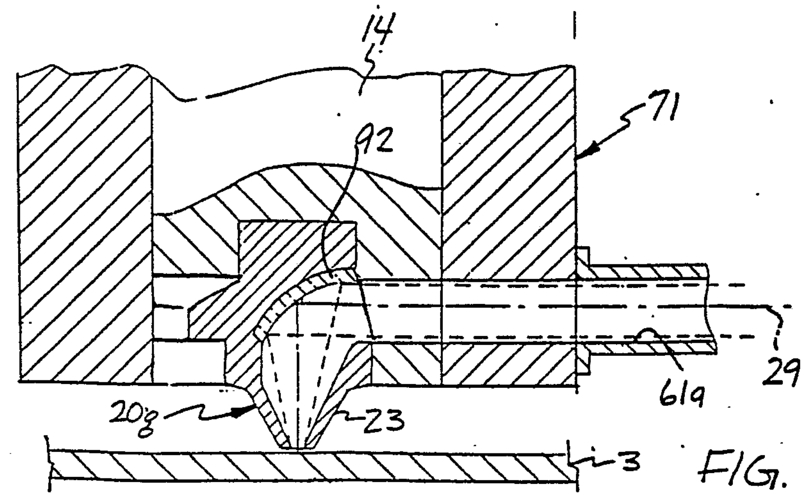


FIG. 17

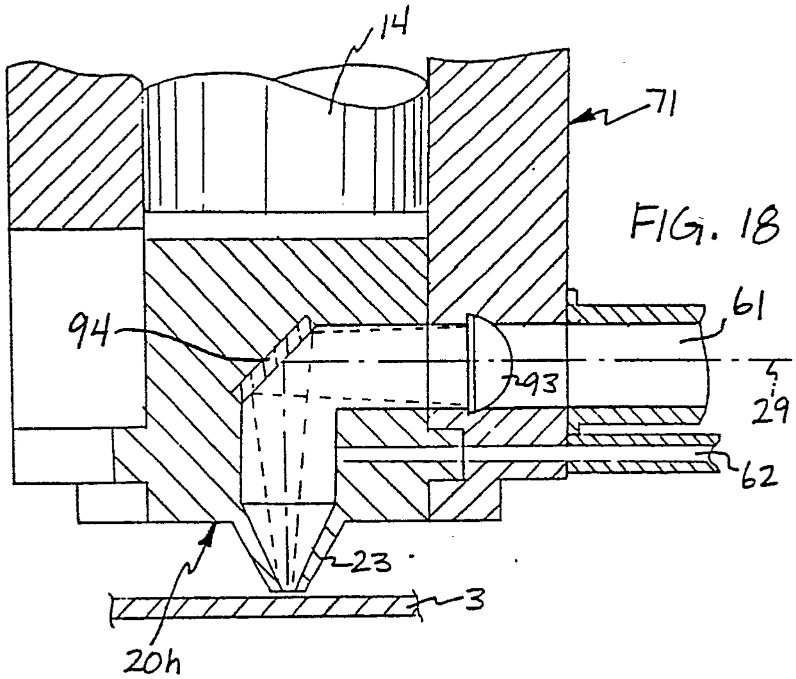
14
71
94
93
61
29
62
23
3
20h

FIG. 18

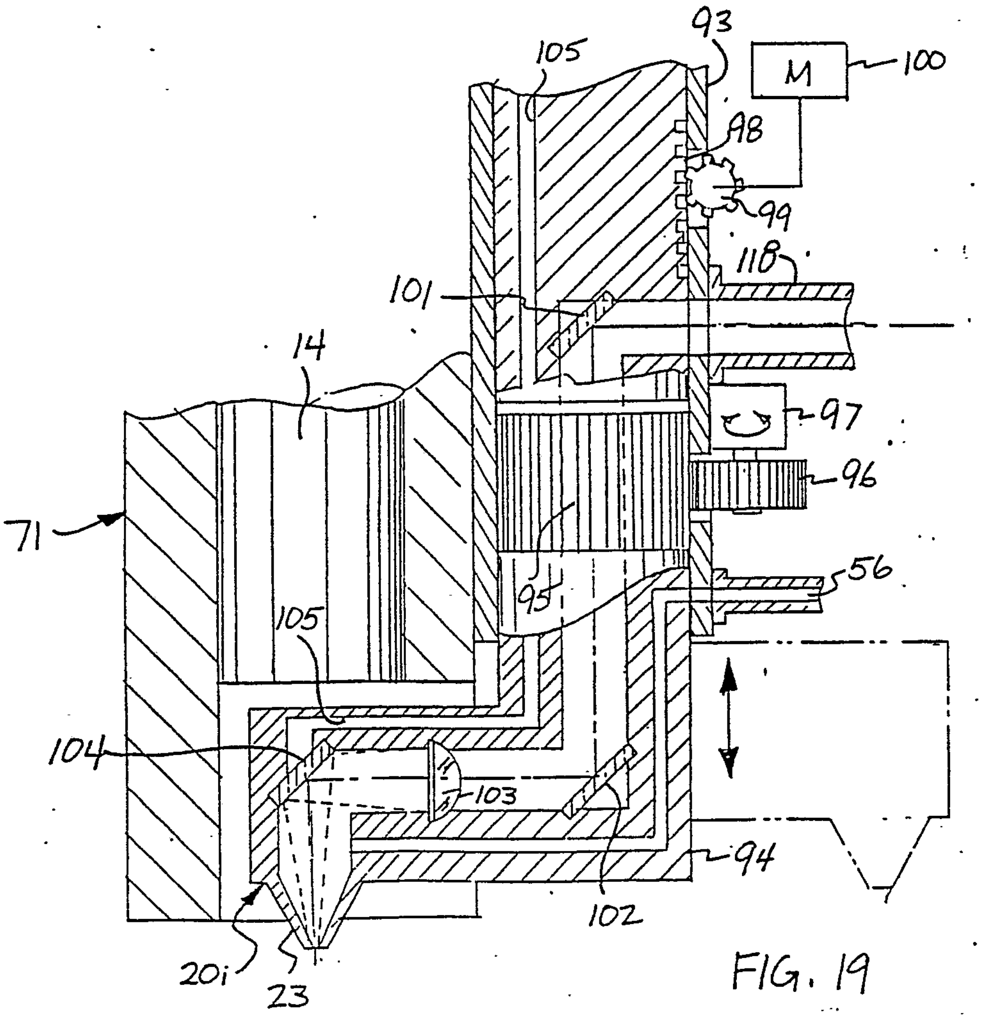
105
93
M
100
98
99
118
101
14
97
96
71
95
56
105
104
103
102
94
20i
23

FIG. 19

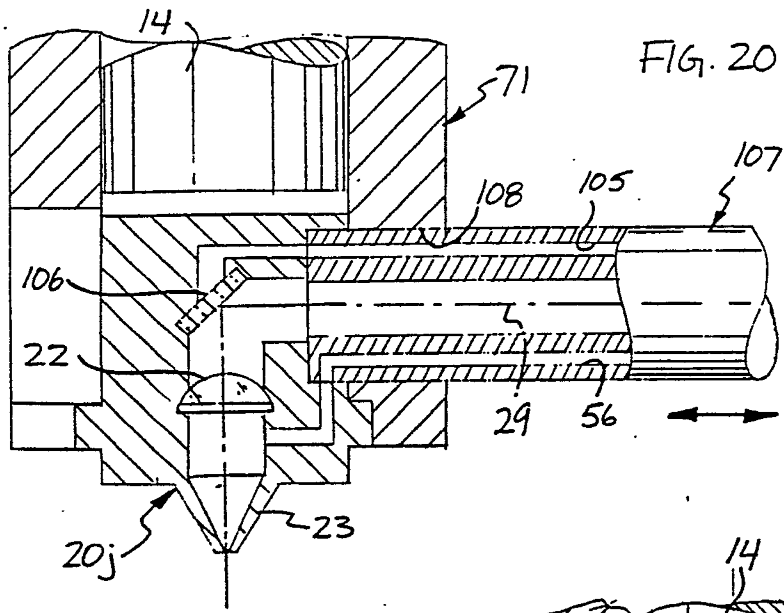


FIG. 20

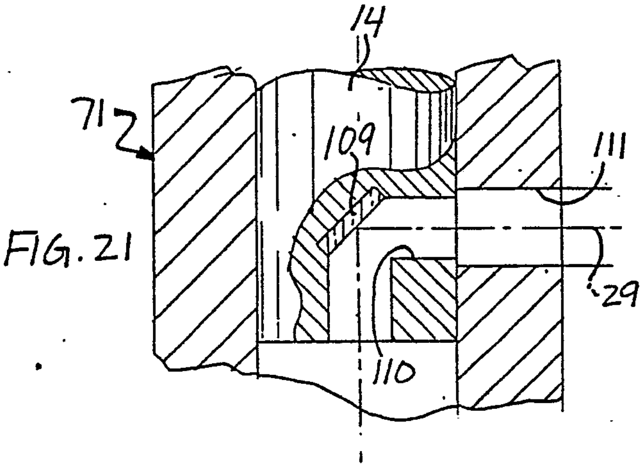


FIG. 21

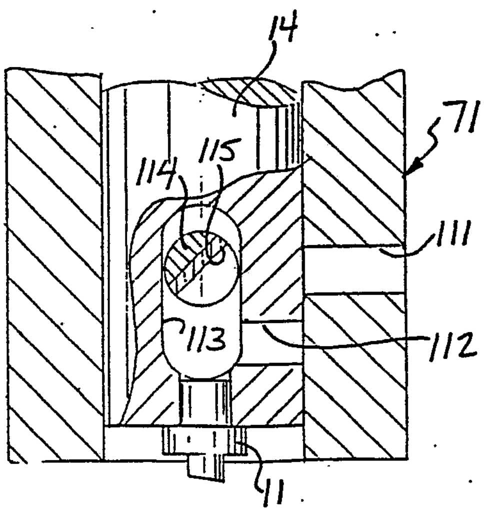


FIG. 22

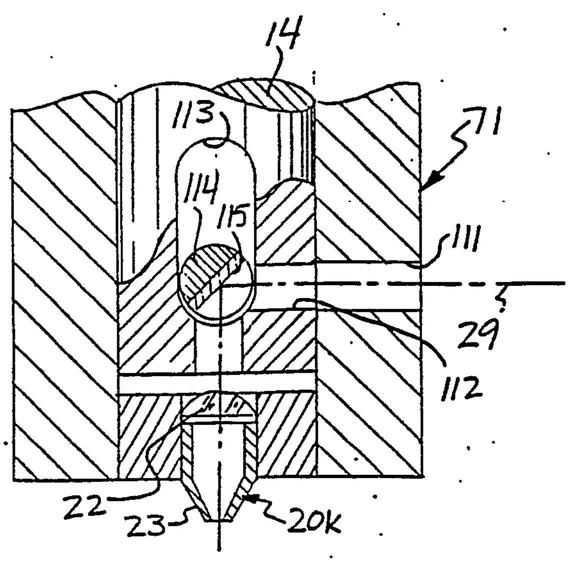


FIG. 23

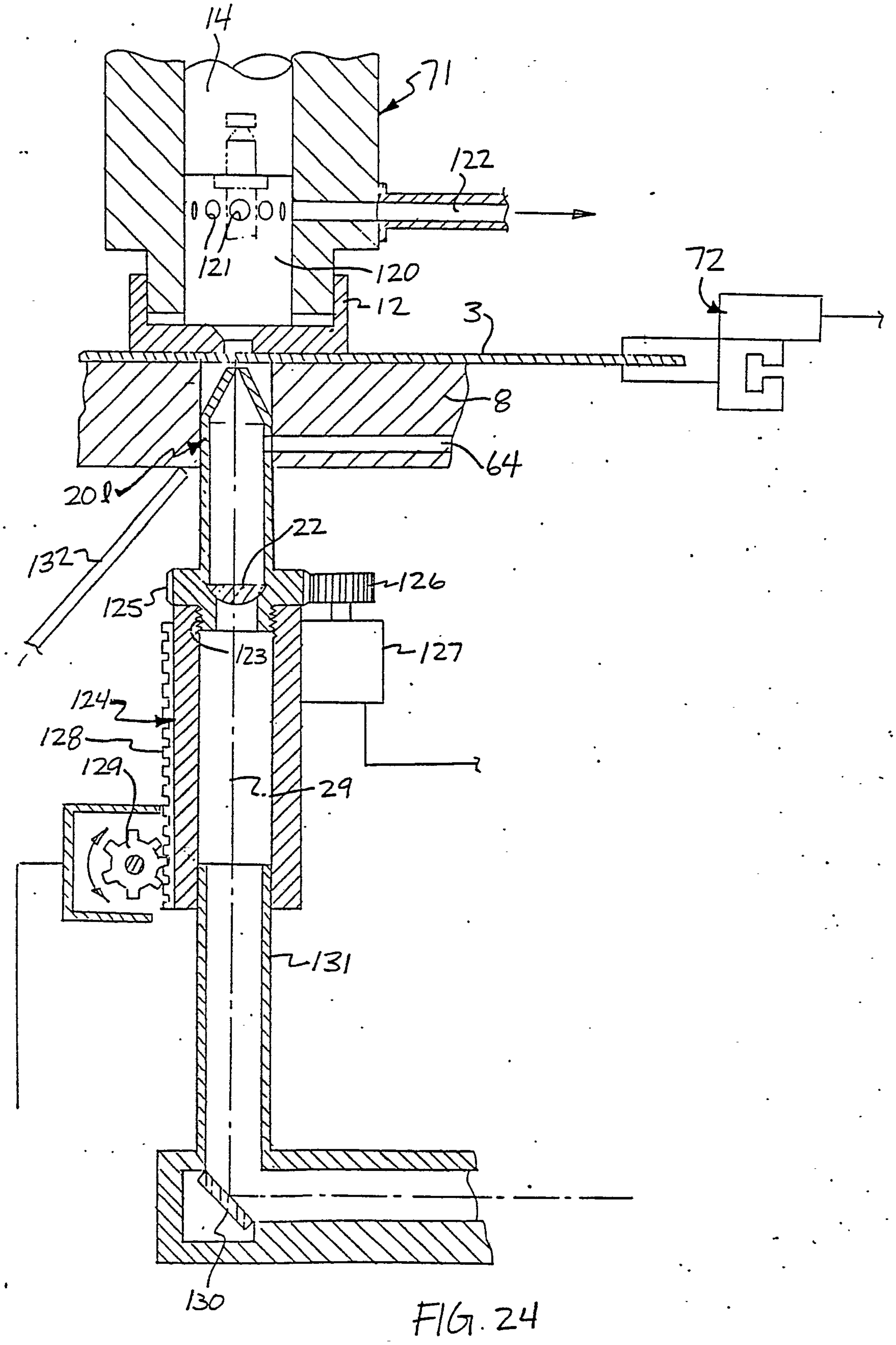
14
71
122
121
120
72
12
3
8
64
20l
22
132
126
125
127
123
124
128
129
29
131
130

FIG. 24

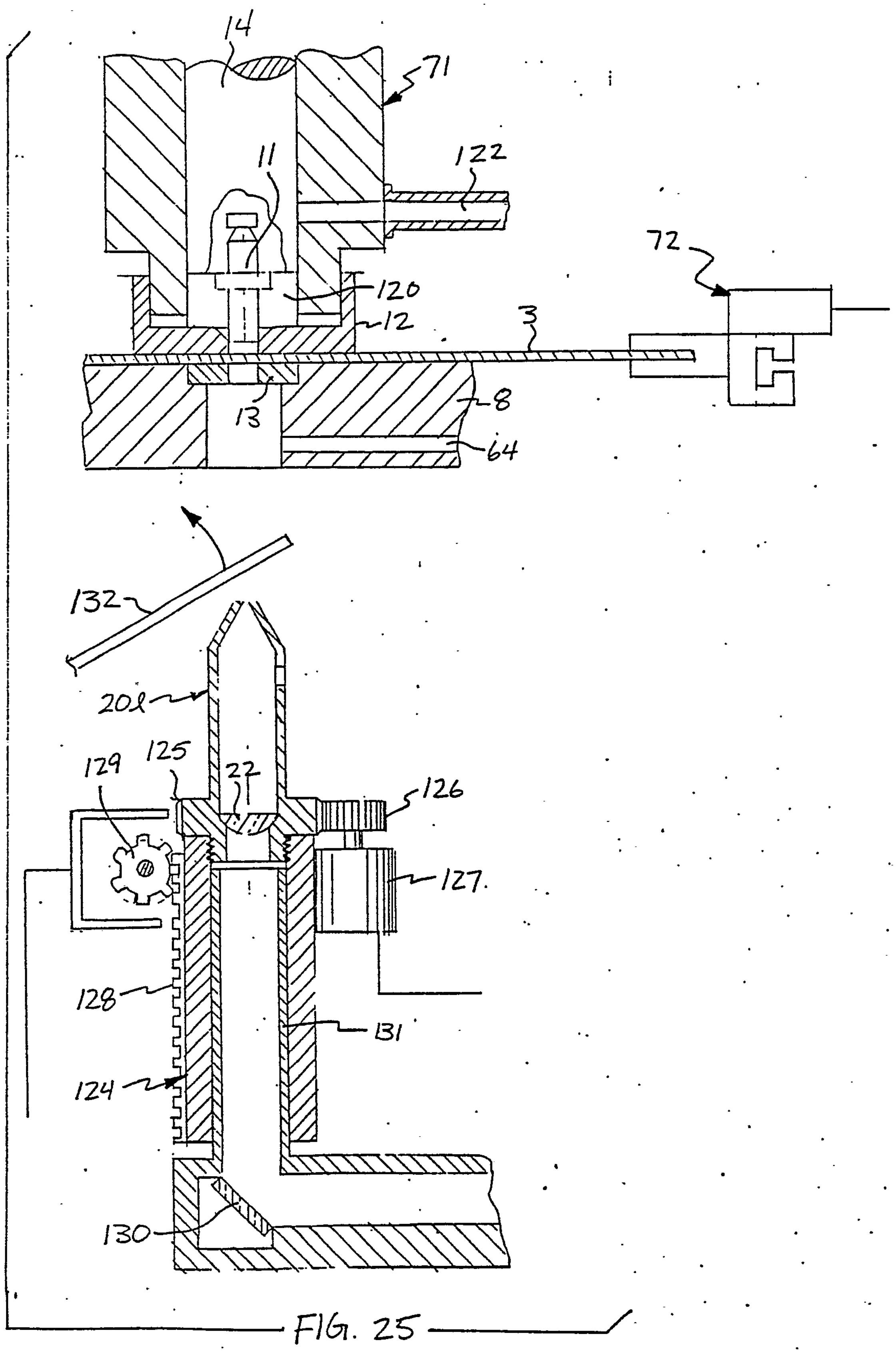
14
71
11
122
72
120
12
3
13
8
64
132
201
125
129
22
126
127
128
131
124
130

FIG. 25

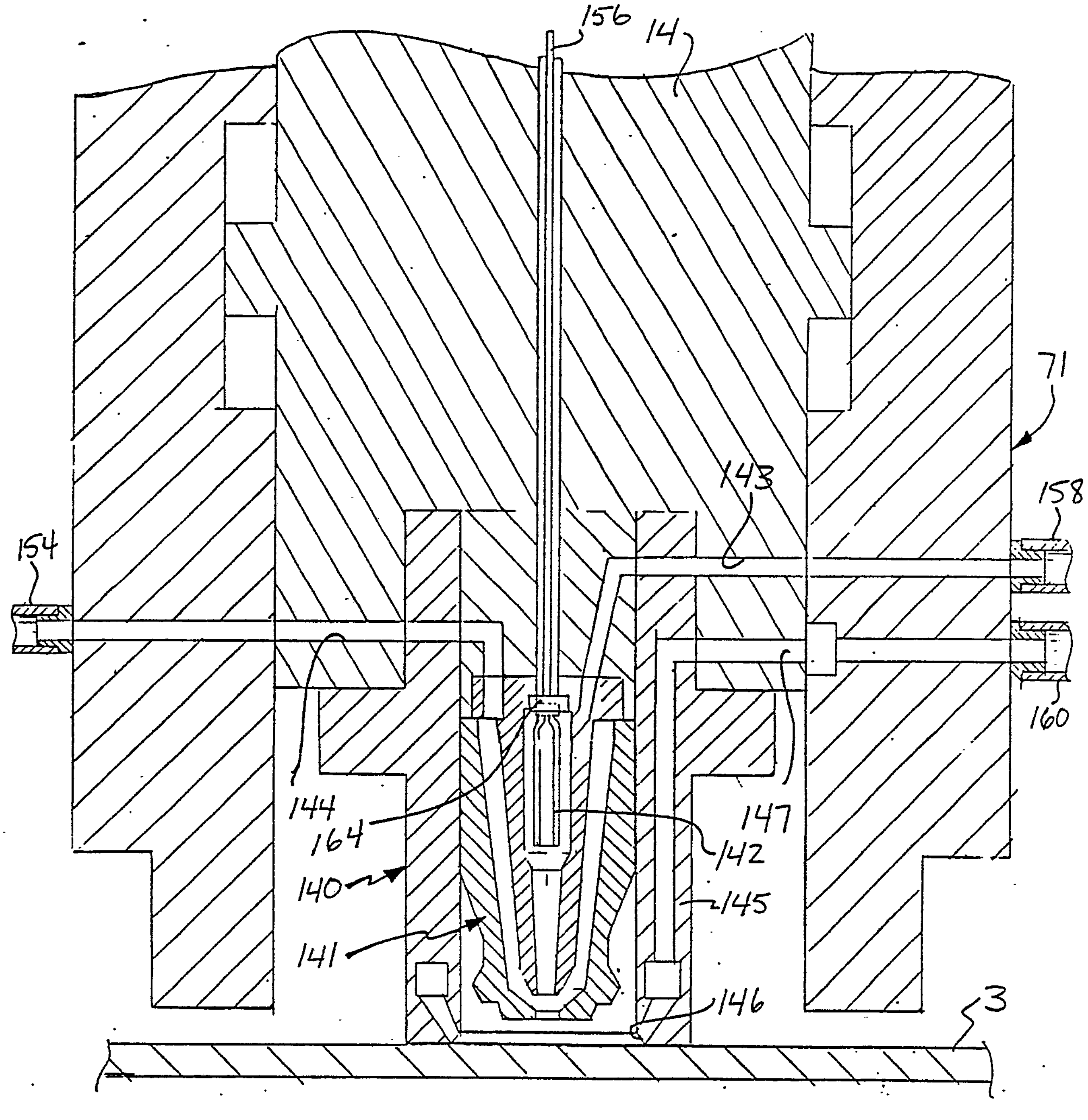


FIG. 26

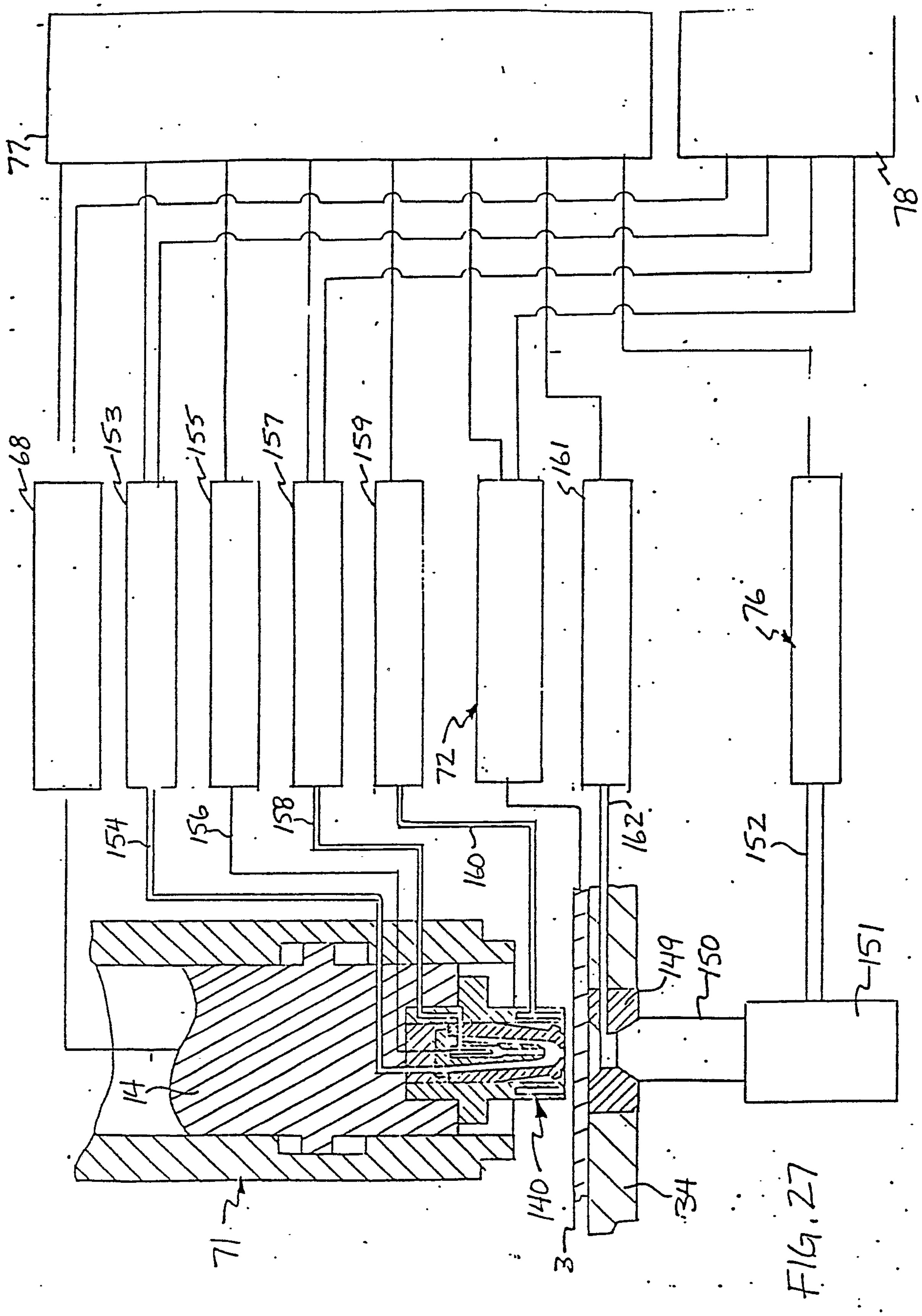
77
78
68
153
155
157
159
161
72
76
154
156
158
160
162
152
149
150
151
14
140
71
3
34

FIG. 27